(19) Europäisches Patentamt
European Patent Office
Office européen des brevets

(11)  EP 2 527 805 B1

(12)  EUROPÄISCHE PATENTSCHRIFT

(45) Veröffentlichungstag und Bekanntmachung des Hinweises auf die Patenterteilung:
**30.11.2022  Patentblatt 2022/48**

(21) Anmeldenummer: **11167924.7**

(22) Anmeldetag: **27.05.2011**

(51) Internationale Patentklassifikation (IPC):
**G01F 23/284** *(2006.01)*

(52) Gemeinsame Patentklassifikation (CPC):
**G01F 23/284**

(54) **Auswertevorrichtung und Verfahren zum Bestimmen einer Kenngröße für die Lage einer Grenzfläche in einem Behälter**

Evaluation device and method for determining a parameter for the position of a boundary area in a container

Dispositif d'évaluation et procédé de détermination d'une grandeur caractéristique pour la position d'une surface limite dans un récipient

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**28.11.2012  Patentblatt 2012/48**

(73) Patentinhaber: **VEGA Grieshaber KG**
**77709 Wolfach (DE)**

(72) Erfinder:
• **WELLE, Roland**
 **77709 Oberwolfach (DE)**

• **GRIESSBAUM, Karl**
 **77796 Mühlenbach (DE)**
• **FEHRENBACH, Josef**
 **77716 Haslach (DE)**

(74) Vertreter: **Maiwald GmbH**
**Elisenhof**
**Elisenstraße 3**
**80335 München (DE)**

(56) Entgegenhaltungen:
**EP-A1- 2 309 235          DE-A1-102004 052 110**
**DE-A1-102007 060 579     US-A1- 2003 061 876**
**US-A1- 2009 299 662**

EP 2 527 805 B1

**Beschreibung**

Technologisches Gebiet

Die vorliegende Erfindung betrifft das Gebiet der Messtechnik, insbesondere betrifft die vorliegende Erfindung das Gebiet der Füllstandmessung mittels Laufzeitverfahren. Es wird eine Auswertevorrichtung für ein Füllstandmessgerät zur Bestimmung einer Kenngröße für die Lage einer Grenzfläche, ein Verfahren zum Bestimmen einer Kenngröße für die Lage einer Grenzfläche in einem Behälter, ein computerlesbares Speichermedium zum Ausführen des erfindungsgemäßen Verfahrens und ein Programmelement zum Ausführen des erfindungsgemäßen Verfahrens beschrieben.

Technologischer Hintergrund

Ein Füllstandmessgerät weist eine Auswerteelektronik und einen Füllstandsensor auf. In der Auswerteelektronik findet die Signalverarbeitung statt. Bei den nach dem FMCW (Frequency Modulated Continuous Wave) Laufzeitverfahren oder Impuls-Laufzeitverfahren arbeitenden Füllstandsensoren werden Signale, beispielsweise elektromagnetische oder akustische Wellen, in Richtung einer Füllgutoberfläche imitiert. Zum zielgerichteten Aussenden der Signale weist ein Füllstandsensor oftmals eine Antenne auf. Anschließend an das Aussenden des Signals zeichnet der Sensor die Reflexion des ausgesendeten Signals als Echosignale auf. Echos können durch die Reflexionen von einem Füllgut, den Behältereiribauten und dem Behälter selbst verursacht sein. Der Sensor leitet aus den ermittelten Echosignalen, die oftmals als Echokurven zur Verfügung stehen, die Lage oder Position einer Oberfläche oder Grenzfläche von zumindest einem der im Behälter befindlichen Füllgüter ab.

Bei der Verwendung akustischer oder optischer Wellen breitet sich das vom Füllstandmessgerät, insbesondere dessen Sensor, erzeugte Signal im Allgemeinen frei in Richtung der zu vermessenden Füllgutoberfläche aus. Bei Geräten, welche Radarwellen zur Vermessung der Füllgutoberfläche benutzen, kommt sowohl eine freie Ausbreitung in Richtung des zu vermessenden Mediums in Betracht als auch eine Ausbreitung im Inneren eines Hohlleiters, welcher Radarwellen vom Füllstandmessgerät zum Medium führt. Bei Geräten, die nach dem Prinzip der geführten Mikrowelle arbeiten, werden die hochfrequenten Signale entlang eines Wellenleiters zum Medium hin geführt.

An der Oberfläche des zu vermessenden Mediums, Schüttguts oder allgemein der zu vermessenden Grenzfläche wird ein Teil der ankommenden Signale, insbesondere ein Teil der Signalenergie, reflektiert und gelangt nach einer entsprechenden Laufzeit wieder zurück zum Füllstandmessgerät und kann dort von dessen Sensor erfasst werden. Die nicht reflektierten Signalanteile, insbesondere der nicht reflektierte Anteil einer in dem Signal enthaltenen Energie, dringen in das Medium oder Füllgut ein und breitet sich entsprechend den physikalischen Eigenschaften des Mediums in diesem weiter in Richtung des Behälterbodens aus. Der Behälterboden ist im Allgemeinen gegenüber dem Füllstandmessgerät angeordnet. Die in das Medium eindringenden Signale werden an dem Behälterboden wie an einer Grenzfläche reflektiert und gelangen nach dem erneuten Passieren des Mediums und möglicherweise dem Passieren einer überlagerten Atmosphäre wieder zurück zum Füllstandmessgerät, wo sie von dem Sensor des Füllstandmessgeräts aufgezeichnet werden können. Das Füllstandmessgerät empfängt die an den verschiedenen Stellen reflektierten Signale und bestimmt daraus nach unterschiedlichen Verfahren die Distanz zwischen dem Füllstandmessgerät und dem Füllgut.

Das Buch, Peter Devine, "Radar Level Measurement the user's guide", ISBN 0-9538920-0-X, beschreibt den prinzipiellen Aufbau von Radarfüllstandmesssensoren.

Die Druckschrift DE 10 2004 052 110 A1 beschreibt ein Verfahren zur Messung eines Füllstandes, bei dem anhand von mindestens einer Eigenschaft eines Echos, wie einer Laufzeitänderung, eine Kenngröße ermittelt wird, anhand derer eine Klassifizierung des Echos vorgenommen wird.

Die Druckschrift DE 10 2006 019191 beschreibt ein Verfahren zur Ermittlung und Überwachung eines Füllstandes in einem Behälter.

Die Druckschrift WO 2010/071564 A1 beschreibt Referenz-Impedanzen an bekannten Positionen an einem Wellenleiter, um einen Teil eines elektromagnetischen Signals zu reflektieren.

Die Druckschrift US 2008/0060431 beschreibt die Bestimmung eines Füllstandes mittels einer Bodenreflexion bei bekanntem Abstand zum Boden.

Die Druckschrift DE 198 24 267 A1 beschreibt ein Verfahren zur Erkennung von Nutz- und Störechos, bei welchem für Einzelechos ein Geschwindigkeitsmaß bestimmt wird und die Geschwindigkeitsmaße verschiedener Echos verglichen werden, um das Ergebnis des Vergleichs bei der Echobewertung heranzuziehen. Die Druckschrift US 5 438 867 beschreibt ein Verfahren zur Messung eines Füllstandes einer Flüssigkeit in einem Behälter, bei dem ein Störsignal, insbesondere ein am Boden reflektiertes Signal ausgefiltert oder anderweit messtechnisch berücksichtigt wird.

Die Druckschrift WO 03/016835 beschreibt ein Verfahren zur Auswertung von Meßsignalen indem eine Meßkurve mit Referenz-Signaldaten verglichen werden.

Die Druckschrift WO 2009/037000 beschreibt das Verfolgen von Echos mittele eines Trackingverfahrens.

Die Druckschrift EP 2 166 320 A2 beschreibt das Verwenden einer Reflexion eines höheren Modes zur Schätzung der Position einer Reflexion eines Hauptmodes.

Die Druckschrift US 2003/061876 A1 beschreibt ein akustisches Fluid-Messsystem welches mehrere Sonden zur Erzeugung einer Reflexion nutzt, die in einem Treibstoff Tank angeordnet sind, um die Menge des Fluids zu bestimmen und aus der Anzahl erkannter mehrerer nachfolgender Reflexionen Rückschlüsse auf die Vertrauenswürdigkeit der Messung zu erhalten.

Die Druckschrift US 2009/0299662 A1 beschreibt die Auswertung einer Form eines Echos um Informationen der Topographie einer Füllgutoberfläche zu erhalten, wobei ein Echoprofil bestimmt wird, welches unter anderem durch mehrfache Reflexionen entsteht.

Die Druckschrift EP 2 309 235 A1 betrifft eine segmentbasierte Signalverarbeitung bei dem spezialisierte Algorithmen zum Einsatz kommen, die unter dem Begriff "Tracking" bekannt sind.

Die Druckschrift DE 10 2004 052 110 A1 beschreibt ein Verfahren zur Füllstandmessung nach dem Laufzeitprinzip und insbesondere die Klassifizierung von Echos anhand von Kenngrößen, wobei ein Echotyp als Mehrfachecho bezeichnet wird.

Es mag jedoch kein effizientes Messen einer Position einer Grenzfläche beschrieben sein.

Zusammenfassung der Erfindung

Die Erfindung betrifft die Gegenstände mit den Merkmalen der unabhängigen Patentansprüche. Weiterbildungen der Erfindung ergeben sich aus den abhängigen Patentansprüchen und der folgenden Beschreibung.

Es wird eine Auswertevorrichtung für ein Füllstandmessgerät zur Bestimmung einer Kenngröße für die Lage einer Grenzfläche in einem Behälter, ein Verfahren zum Bestimmen einer Kenngröße für die Lage einer Grenzfläche in einem Behälter, ein computerlesbares Speichermedium, auf dem ein Programm zum Ausführen des erfindungsgemäßen Verfahrens gespeichert ist und ein Programmelement zum Ausführen des erfindungsgemäßen Verfahrens beschrieben.

Gemäß einem Aspekt der vorliegenden Erfindung wird eine Auswertevorrichtung für ein Füllstandmessgerät zur Bestimmung einer Kenngröße für die Lage einer Grenzfläche in einem Behälter gemäß Anspruch 1 angegeben.

Gemäß einem Aspekt kann die Kenngröße ein Maß für die Echoposition und/oder für die Lage der Grenzfläche sein. Insbesondere mag die Kenngröße die Echoposition sein, beispielsweise angegeben als physikalische oder als elektrische Distanz jeweils zu einer Bezugsfläche.

Die Ausgabeeinrichtung ist mit der Echokurvenauswerteeinrichtung verbunden. Ferner ist die Echokurvenauswerteeinrichtung zum Erkennen zumindest eines Mehrfachechos in der Echokurve und zum Bestimmen der Position des zumindest einen Mehrfachechos sowie zum Bestimmen der Ordnung des Mehrfachechos eingerichtet. Das Mehrfachecho, das erkannt werden soll, weist zumindest die Ordnung 1 auf. Somit mag es sich bei dem Mehrfachecho, welches als Grundlage zur Bestimmung der Kenngröße für die Lage der Grenzfläche in der Auswertevorrichtung genutzt wird, um zumindest ein Mehrfachecho erster Ordnung oder ein Mehrfachecho einer höheren als der ersten Ordnung handeln. Oder in anderen Worten mag die Echokurvenauswerteeinrichtung Echos der Ordnung 0 nicht berücksichtigen.

Die Echokurvenauswerteeinrichtung ist ferner eingerichtet, aus der Position des Mehrfachechos und aus der bestimmten Ordnung dieses Mehrfachechos sowie, wenn vorhanden, aus dem bereitgestellten Umgebungsparameter oder den bereitgestellten Umgebungsparametern die Kenngröße für die Lage der Grenzfläche in dem Behälter zu bestimmen. Diese Bestimmung der Kenngröße aus den ermittelten und/oder eingegebenen Parametern kann rechnerisch erfolgen. Die bestimmte Kenngröße kann an der Ausgabeeinrichtung zur Weiterverarbeitung bereitgestellt werden.

In einem anderen Beispiel der vorliegenden Erfindung mag die Kenngröße für die Lage der Grenzfläche als Echokennwert bereitgestellt werden, mit der Vorgabe, dass der Echokennwert zu einem Mehrfachecho gehört. Für den Echokennwert mag also ermittelt worden sein, dass er zu dem Mehrfachecho gehört. Ein solcher Echokennwert eines Mehrfachechos kann beispielsweise ein Abstand von einer Bezugsposition, ein Anfang und Ende eines Mehrfachechos, die Amplitude eines Mehrfachechos oder aber auch die ungefähre Position eines Mehrfachechos sein. Der Echokennwert kann zum Vermessen eines Echos von einer vorhanden Vermessungseinrichtung genutzt werden, die davon ausgehen kann, einen gefilterten Echokennwert nach dem Kriterium Mehrfachecho von mindestens der Ordnung Eins zu erhalten.

Gemäß einem weiteren Aspekt der vorliegenden Erfindung wird ein Verfahren zum Bestimmen einer Kenngröße für die Lage einer Grenzfläche in einem Behälter gemäß Anspruch 11 geschaffen. Aus der bestimmten Position des Mehrfachechos und der bestimmten Ordnung des Mehrfachechos sowie aus dem Umgebungsparameter oder einer Vielzahl von eingegebenen und/oder erlernten Umgebungsparametern erfolgt die Bestimmung der Kenngröße für die Lage der Grenzfläche in dem Behälter, welche danach bereitgestellt werden kann.

Gemäß einem weiteren Aspekt der vorliegenden Erfindung wird ein computerlesbares Speichermedium gemäß Anspruch 14 angegeben.

Ein computerlesbares Speichermedium kann ein Speicherbaustein, eine CD oder eine DVD aber auch ein Computernetzwerk sein, aus dem das gespeicherte Programm abgerufen werden kann.

Gemäß noch einem anderen Aspekt der vorliegenden Erfindung wird ein Programmelement gemäß Anspruch 15 angegeben.

Bei einem Mehrfachecho mag es sich um ein reflektiertes Signal handeln, welches, bevor es empfangen wurde, zumindest einmal an einer Deckenfläche reflektiert worden ist. Die Deckenfläche mag sich dabei im Wesentlichen gegenüber der Grenzfläche befinden, deren Lage bestimmt werden soll. In anderen Worten mag die Deckenfläche in der Ausbreitungsrichtung der von der Grenzfläche reflektierten Signale bezogen auf die Grenzfläche gelegen sein. Ist die Deckenfläche ein Behälterdeckel, mag der Sensor, also der Sender und/oder der Empfänger des Signals, im Bereich der Deckenfläche angeordnet sein. Die Deckenfläche kann sich gegenüber einer Bodenfläche des Behälters befinden.

Ein Mehrfachecho kann auch als Vielfachecho bezeichnet werden. Die Ordnung des Mehrfachechos mag der Anzahl Reflexionen an der Deckenfläche entsprechen. Die Ordnung eines Mehrfachechos kann auch der Anzahl der Reflexionen eines ausgesendeten Signals an einer Medienoberfläche oder Grenzfläche eines in einem Behälter zu messenden Füllgutes reduziert um den Wert 1 entsprechen. Im Gegensatz zu einem gemischten Mehrfachecho mag ein Mehrfachecho, das von dem beschriebenem Verfahren oder der beschriebenen Vorrichtung berücksichtigt wird, mehrfach an der im Wesentlichen selben Grenzfläche reflektiert worden sein. Die Echokurvenauswerteeinrichtung mag daher eingerichtet sein, bei erkannten Mehrfachechos festzustellen, dass sie von der im Wesentlichen selben Grenzfläche reflektiert wurden.

Ein Mehrfachecho 0ter Ordnung mag als direktes Echo oder Hauptecho bezeichnet werden, während ein Mehrfachecho einer höheren als 0ter Ordnung als mittelbares Echo bezeichnet werden mag. Da das beschriebene Verfahren und die beschriebene Vorrichtung im Wesentlichen nur Mehrfachechos höherer Ordnung als Ordnung Null berücksichtigen mag, mag das beschriebene Verfahren und die beschriebene Vorrichtung der mittelbaren Messung der Position einer Füllgutoberfläche oder einer Grenzfläche dienen. Die mittelbare Messung kann jedoch auch mit einer direkten Messung kombiniert werden, beispielsweise wenn ein Vergleich der von beiden Verfahren erzielten Ergebnisse durchgeführt werden soll.

Ein Füllgut (filling charge) mag das Material sein, welches in einen Behälter gefüllt wird und das eine Reflexionsoberfläche innerhalb des Behälters bildet. Bei einem Füllgut kann es sich um ein Fluid, ein Gas oder ein Schüttgut (bulk solid) handeln.

Eine Echokurve, ein Echodiagramm oder ein Reflexionsdiagramm mag den zeitlichen Verlauf von den empfangenen Signalen darstellen, welche von den ausgesendeten Signalen durch Reflexionen an unterschiedlichsten Reflektoren erzeugt worden sind. Eine Form diese Reflexionen darzustellen und auszuwerten ist ein Zeitdiagramm. In dem Zeitdiagramm mögen Echos als Peaks oder Erhebungen sichtbar sein, die mittels unterschiedlicher Verfahren vermessen werden können. Bei der Bestimmung von relevanten Signalen mag es darum gehen, die Vielzahl von Peaks in der Echokurve so zu bestimmen, dass eine Aussage möglich ist, welches der empfangenen Echosignale dem Füllstand entspricht, und nicht von Störungen verursacht ist.

Die Auswertevorrichtung mag zum Empfangen der Echokurve eine Eingangsschnittstelle aufweisen und zum Bereitstellen der ermittelten Kenngröße für die Lage der Grenzfläche mag die Auswertevorrichtung, insbesondere deren Ausgabeeinrichtung, eine Ausgangsschnittstelle aufweisen.

Bei diesen Schnittstellen kann es sich um Standardschnittstellen der Messtechnik handeln, die beispielsweise nach dem I$^2$C-( Inter-Integrated Circuit) Standard, HART- Standard, Fieldbus- Standard, Profibus- Standard, der RS232 Norm oder dem USB (Universal Serial Bus) Standard arbeiten. Durch das Vorhandensein von Standardschnittstellen der Messtechnik kann die Auswertevorrichtung auch eingerichtet sein, ein bestehendes Messgerät, insbesondere ein vorhandenes Füllstandmessgerät oder Feldgerät, mit der entsprechenden Funktionalität zur mittelbaren Bestimmung einer Kenngröße für die Lage der Grenzfläche in einem Behälter zu erweitern. Die Auswertevorrichtung kann folglich auch als Nachrüstkit für vorhandene Füllstandmessgeräte bereitgestellt werden.

Gemäß einem weiteren Aspekt der vorliegenden Erfindung mag die Echokurvenauswerteeinrichtung zum Bestimmen eines weiteren Mehrfachechos und dessen Position sowie dessen Ordnung aus der Echokurve eingerichtet sein.

Ferner mag die Echokurvenauswerteeinrichtung eingerichtet sein, durch das Verknüpfen der Position des weiteren Mehrfachechos und der Ordnung des weiteren Mehrfachechos mit der Position des Mehrfachechos und der Ordnung des Mehrfachechos die Kenngröße für die Lage der Grenzfläche in dem Behälter zu bestimmen und über die Ausgabeeinrichtung bereitzustellen.

Beim Bestimmen des weiteren Mehrfachechos kann in einem Beispiel darauf geachtet werden, dass beide Mehrfachechos von der selben Grenzfläche reflektiert worden sind.

Das Bestimmen der gesuchten Kenngröße über das Auswerten zweier unterschiedlicher Mehrfachreflexionen von einer höheren Ordnung als der Ordnung 0 in Verbindung mit der aufgefundenen Ordnung mag eine Ermittlung der Kenngröße mit elektrischen Distanzwerten ermöglichen und somit verhindern, dass physikalische Distanzwerte ermittelt werden müssen. Das Bestimmen einer vollkompensierten Echokurve mit physikalischen Distanzwerten kann folglich vermieden werden.

Gemäß einem anderen Aspekt der vorliegenden Erfindung mag an der Entstehung des zumindest einen Mehrfachechos zumindest eine Fläche beteiligt sein, welche ausgewählt ist aus der Gruppe von Flächen, bestehend aus einer Grenzfläche, einer weiteren Grenzfläche, einer Grenzfläche zwischen zumindest zwei unterschiedlichen Füllgütern und einer Bodenfläche.

Da sämtliche Grenzflächen, die sich im Inneren eines Behälters ausbilden können, zur Lagebestimmung genutzt werden können, mag die Berechnung nicht darauf angewiesen sein, die direkt von der Füllgutoberfläche stammenden Echos zu identifizieren. Es mag also im Wesentlichen ausreichen sicherzustellen, dass die für die Ermittlung genutzten Echos von der selben Oberfläche stammen. Die Ordnung des weiteren Mehrfachechos mag höher als die Ordnung des Mehrfachechos sein. Das Mehrfachecho und das weitere Mehrfachecho mögen von dem selben ausgesendeten Signal stammen und von Reflexionen an der selben Grenzfläche. Gemäß einem weiteren Aspekt der vorliegenden Erfindung mag die Echokurvenauswerteeinrichtung beim Bestimmen der Kenngröße für Lage der Grenzfläche zumindest einen Umgebungsparameter berücksichtigen. Der zumindest eine Umgebungsparameter kann ausgewählt sein aus der Gruppe von Umgebungsparametern, bestehend aus der [i] relativen Permittivität eines Füllgutes, der [ii] relativen Permeabilität eines Füllgutes, der [iii] relativen Permittivität einer Überlagerungsatmosphäre, der [iv] relativen Permeabilität einer Überlagerungsatmosphäre, der [v] relativen Permittivität eines weiteren Füllgutes, der [vi] relativen Permeabilität eines weiteren Füllgutes, einer [vii] Domschachtlänge, einer [viii] negativen Domschachtlänge, einer [ix] Behälterhöhe, und einem Abstand eines Sensors zu einer Hallendecke.

Zum Eingeben des Umgebungsparameters kann eine Eingabeeinrichtung an der Auswertevorrichtung vorgesehen sein. Die Eingabe des Umgebungsparameters oder einer Vielzahl von Umgebungsparametern mag die physikalischen Randbedingungen bereitstellen, die den Zustand in dem Behälter beschreiben. Insbesondere mag der Umgebungsparameter die Geometrie des Behälters, die Lage eines Sensors und die Materialeigenschaften der von dem ausgesandten Signal passierten Materialien sowie die Geometrie der Materialien beschreiben.

Gemäß einem weiteren Aspekt der vorliegenden Erfindung mag die Auswertevorrichtung eine Parameterbestimmungseinrichtung zum Bestimmen zumindest eines Umgebungsparameters aufweisen.

Die Parameterbestimmungseinrichtung kann den zumindest einen Umgebungsparameter, wie beispielsweise die Behalterhöhe, die Domschachtlänge oder die negative Domschachtlänge sowie die Materialeigenschaften, wie die relative Permeabilität oder die relative Permittivität des Füllgutes, selbstständig, selbstlernend und automatisch bestimmen. Die Parameterbestimmungseinrichtung kann beispielsweise ein zusätzlich an dem Füllstandmessgerät oder an der

Auswertevorrichtung angeschlossener Sensor sein. Die Eingabeeinrichtung kann die Parameterbestimmungseinrichtung aufweisen. Die Parameterbestimmungseinrichtung mag die automatische Bestimmung zumindest eines Umgebungsparameters ermöglichen. Wenn eine solche Parameterbestimmungseinrichtung nicht vorhanden ist, kann der zumindest eine Umgebungsparameter manuell, wie beispielsweise mittels einer Tastatur, mittels Tastern, mittels eines Computers oder mittels eines Handgeräts eingegeben werden.

Gemäß noch einem weiteren Aspekt der vorliegenden Erfindung mag die Auswertevorrichtung eine Trackingeinrichtung zum Verfolgen eines Echos Ober mehrere Messzyklen hinweg aufweisen. Ein Messzyklus mag das Zeitintervall sein, über das hinweg eine Echokurve ermittelt wird. Somit mag sich eine Folge von einzelnen Echokurven entlang einer Zeitachse ergeben.

Die Trackingeinrichtung mag mehrere Echokurven oder Echos über mehrere Messzyklen hinweg aufzeichnen, speichern und/oder darstellen. Durch das Verfolgen eines Echos über mehrere Messzyklen mag ein Verschwinden, Auftauchen und/oder Durchtauchen eines Echos durch ein anderes ermittelbar sein.

Gemäß noch einem anderen Aspekt der vorliegenden Erfindung mag die Ausgabeeinrichtung zumindest eine Schnittstelle zum Bereitstellen eines Signals aufweisen, wobei das Signal zum Anzeigen eines Qualitätsparameters, wie beispielsweise eines Echoverlustes, der Güte. einer Messung, dem Aussagegehalt einer Messung und/oder des Typs des erkannten Mehrfachechos eingerichtet ist.

Mittels dieser Schnittstelle kann beispielsweise einem Füllstandmessgerät die Güte des ermittelten Kennwerts mitgeteilt werden. Diese Güte kann das Füllstandmessgerät wiederum beispielsweise an einer Anzeigeeinrichtung darstellen. Die Auswertevorrichtung mag in Situationen eingesetzt werden, in denen mittels anderer Auswertemethoden, wie dem Bestimmen von direkten Echos, kein Ergebnis erzielt werden kann. Um einem Benutzer das Vorliegen solch einer Situation mitzuteilen und um den Benutzer zu informieren, dass das Füllstandmessgerät gerade zur Bestimmung der Lage der Grenzfläche die vorgeschlagene Auswertevorrichtung nutzt, kann eine solche Anzeigeeinrichtung vorgesehen sein.

Gemäß einem anderen Aspekt der vorliegenden Erfindung mag ein Füllstandmessgerät beschrieben sein, das nach dem Prinzip der Laufzeitmessung eine Echokurve erfasst Dieses Füllstandmessgerät mag eine Auswertevorrichtung zur Bestimmung einer Kenngröße für die Lage einer Grenzfläche in einem Behälter gemäß der Erfindung aufweisen. Das Füllstandmessgerät mag eingerichtet sein, die erfasste Echokurve an die Auswertevorrichtung zu übertragen, um eine Kenngröße für die Lage einer Grenzfläche zu erhalten und das Füllstandmessgerät mag ferner eingerichtet sein, aus der von der Auswertevorrichtung erhaltenen Kenngröße für die Lage der Grenzfläche einen Füllstand zu ermitteln.

Gemäß einem weiteren Aspekt der vorliegenden Erfindung weist das Füllstandmessgerät zumindest eine weitere Auswertevorrichtung zur Bestimmung einer weiteren Kenngröße für die Lage der Grenzfläche des Füllstandes auf, die in Kombination mit der erfindungsgemäßen Auswertevorrichtung arbeitet, welche die vorhandenen Mehrfachechos bestimmt und auswertet. Die weitere Auswertevorrichtung mag ein anderes Verfahren zur Bestimmung der Lage der Grenzfläche nutzen als das Bestimmen von Mehrfachechos.

Dieses Füllstandmessgerät mit mehreren Auswertegeräten mag eine Entscheidungseinrichtung aufweisen. Die Auswertevorrichtung und jede der zumindest einen weiteren Auswertevorrichtung mag ein unterschiedliches Prinzip zur Ermittlung der jeweiligen Kennwerte oder Kenngröße für die Lage der Grenzfläche verwenden. Die Entscheidungseinrichtung mag mit der Auswertevorrichtung und mit jeder der zumindest einen weiteren Auswertevorrichtung verbunden sein. Die Entscheidungseinrichtung mag eingerichtet sein, von der Auswertevorrichtung die ermittelten Kenngrößen für die Lage der Grenzfläche zu erhalten. Anstelle mehrerer separater Auswertevorrichtungen kann gemäß einem weiteren Aspekt der vorliegenden Erfindung die erfindungsgemäße Auswertevorrichtung die Kenngröße nach unterschiedlichen Prinzipien ermitteln und die ermittelten Ergebnisse separat an die Entscheidungseinrichtung weitergeben. Die Auswertevorrichtung kann die unterschiedlichen Prinzipien in einer vorgebbaren Reihenfolge anwenden, beispielsweise gesteuert durch die Entscheidungseinrichtung. Die Entscheidungsvorrichtung kann aber auch in einem Beispiel feststellen, mit welchem Messprinzip des im Wesentlichen beste Ergebnis erzielt wird und dieses Ergebnis zur Bestimmung der Lage der Grenzfläche nutzen.

In einem Beispiel kann auch ein Füllstandmessgerät oder Grenzstandmessgerät bereitgestellt werden, das im Wesentlichen nur die erfindungsgemäße Auswertevorrichtung aufweist und somit zur Bestimmung des Füllstandes oder des Grenzstandes das Erkennen von Mehrfachechos nutzt.

Gemäß einem anderen Aspekt der vorliegenden Erfindung kann von den einzelnen Auswertevorrichtungen ein Güteparameter, ein Signal oder eine Anzeige über die Sichtbarkeit eines Echos mittels der jeweiligen Auswertevorrichtung an das Füllstandmessgerät weitergegeben werden. Mittels solch eines Signals kann die jeweilige Auswertevorrichtung mitteilen, ob mit dem von ihr genutzten Prinzip ein Echo erkannt worden ist, d.h. ob ein Echo sichtbar ist. Auch kann mitgeteilt werden, wie gut das von der jeweiligen Auswertevorrichtung bestimmte Ergebnis ist, wie sicher also das ermittelte Ergebnis ist.

Die mittels solch einem Signal mitgeteilte Information kann die Entscheidungseinrichtung nutzen, um die bestimmten Kenngrößen der Auswertevorrichtungen zu priorisieren. Die Entscheidungseinrichtung ist folglich eingerichtet, zumindest eine der Auswertevorrichtungen auszuwählen und aus der von der ausgewählten Auswertevorrichtung bereitgestellten Kenngröße den Füllstand zu ermitteln. Die Priorisierung der Auswertevorrichtungen kann aber auch nach einem vorbestimmten Kriterium erfolgen, so dass die von einer bestimmten Auswertevorrichtung bereitgestellte Kenngröße einer von einer anderen Auswertevorrichtung bereitgestellten Kenngröße bevorzugt wird, falls die erst genannte Kenngröße verfügbar ist, d.h. falls das mit der von ihr vorgesehenen Methode bestimmte Echo sichtbar ist. Somit kann die Priorisierung durch die Reihenfolge der Abfrage der Auswertevorrichtungen eingestellt werden. Alternativ neben einer solchen linearen Abarbeitung mag auch eine parallel Abarbeitung denkbar sein.

Je nach der Qualität der vorhandenen Daten kann eine zusätzliche oder andere Auswertevorrichtung genutzt werden, um ein gutes Messergebnis des Füllstandmessgeräts liefern zu können. Messungen nach unterschiedlichen Prinzipien können auch zur Verifikation und zum Durchführen von Plausibilitätstests von Messergebnissen durchgeführt werden.

Mittels dem Auswerten einer von der Füllgutoberfläche herrührenden Mehrfachreflexion mag sich die Genauigkeit einer Füllstandmessung bei nahezu vollständig gefüllten Behältern erhöhen lassen. Außerdem mag die Genauigkeit der Füllstandmessung bei Störreflexionen im Behälter erhöht werden. Mittels einer indirekten Messung von einer Mehrfachreflexion, die von dem Behälterboden herrühren mag, mag sich die Genauigkeit der Fütlstandmessung bei nahezu entleertem Behälter erhöhen lassen. Die Entscheidungseinrichtung mag eingerichtet sein, die entsprechend vorliegende Situation zu erkennen und das passende Messverfahren auszuwählen.

Gemäß einem anderen Aspekt der vorliegenden Erfindung mag die Entscheidungseinrichtung eingerichtet sein, die Qualität für die Ermittlung des Füllstandes anzugeben. Beispielsweise kann an dem Füllstandmessgerät eine Anzeigevorrichtung vorgesehen sein, an der ein Digitalwert oder ein Analogwert, wie beispielsweise ein Lichtsignal, einen Nutzer des Füllstandmessgeräts über die Qualität der ermittelten Position des Füllstandes informiert. Das Füllstandmessgerät mag dazu die Güteparameter auswerten, die von den Echoauswerteeinrichtungen der Auswertevorrichtungen geliefert werden.

Gemäß noch einem anderen Aspekt der vorliegenden Erfindung erfasst das Verfahren zur Füllstandmessung die Echokurve mittels dem Durchführen einer Laufzeitmessung und bestimmt eine Kenngröße für die Lage einer Grenzfläche in dem Behälter durch das Auswerten der erfassten Echokurve mit dem Verfahren zum Bestimmen einer Kenngröße für die Lage einer Grenzfläche. Darüber hinaus wird der Füllstand aus der Kenngröße für die Lage einer Grenzfläche ermittelt. Zur Bestimmung der Lage der Grenzfläche mag eine Umrechnung von Signalwerten durchgeführt werden.

Gemäß einem anderen Aspekt der vorliegenden Erfindung mag das Verfahren zur Füllstandmessung das Bereitstellen von zumindest einem weiteren Verfahren zum Bestimmen einer Kenngröße für die Lage einer Grenzfläche in einem Behälter aufweisen. Die unterschiedlichen Verfahren mögen unterschiedliche Prinzipien zum Bestimmen der Kenngröße für die Lage der Grenzfläche nutzen. Es mag das jeweils angebrachte Verfahren ausgewählt werden und der Füllstand mag aus der Kenngröße für die Lage der Grenzfläche mit dem ausgewählten Verfahren ermittelt werden.

Unterschiedliche Prinzipien für die Verfahren können die direkte Messung der Grenzfläche, die Messung einer weiteren Grenzfläche oder die Messung eines Bodenechos darstellen.

Als ein weiterer Aspekt der vorliegenden Erfindung mag gesehen werden, dass ein Füllstandmessgerät zur Bestimmung der Position eines Füllstandes und/oder einer Trennschicht in einem Behälter geschaffen wird, wobei das Füllstandmessgerät eine Echokurvenerfassungseinrichtung zum Erfassen zumindest einer Echokurve aufweist, die die Reflexionsverhältnisse entlang einer Wegstrecke vom Füllstandmessgerät zum Behälter und zurück abbildet. Die Echokurvenerfassungseinrichtung mag einen Sensor aufweisen. Ferner mag das Füllstandmessgerät eine Auswertevorrichtung zur Auswertung der zumindest einen Echokurve aufweisen, welche zumindest ein Echo in der Echokurve identifiziert, wobei dieses zumindest eine Echo entlang einer Wegstrecke vom Füllstandmessgerät zum Behälter und zurück zumindest zwei Mal an der selben Grenzfläche zumindest eines im Behälter enthaltenen Füllguts reflektiert wird. Darüber hinaus mag das Füllstandmessgerät eine Vermessungseinrichtung zur Bestimmung der Position eines Füllstandes und/oder einer Trennschicht in einem Behälter aufweisen, wobei zum Bestimmen der Position aus der Position des zumindest einen identifizierten Echos die Position eines Füllstandes und/oder einer Trennschicht im Behälter rechnerisch ermittelt wird.

Gemäß noch einem weiteren Aspekt der vorliegenden Erfindung mag die Grenzfläche des zumindest einen im Behälter enthaltenen Füllguts durch die Oberfläche des obersten Füllguts zur Überlagerten Atmosphäre dargestellt werden.

Gemäß noch einem weiteren Aspekt der Erfindung mag die Grenzfläche des zumindest einen im Behälter enthaltenen Füllguts durch eine Trennschicht zwischen zwei verschiedenen Füllgütern im Behälter dargestellt werden.

Gemäß noch einem weiteren Aspekt der Erfindung mag die Grenzfläche des zumindest einen im Behälter enthaltenen Füllguts durch den Boden des Behälters dargestellt werden.

Es soll angemerkt werden, dass unterschiedliche Aspekte der Erfindung mit Bezug auf unterschiedliche Gegenstände beschrieben wurden. Insbesondere wurden einige Aspekte mit Bezug auf Vorrichtungsansprüche beschrieben, wohingegen andere Aspekte in Bezug auf Verfahrensansprüche beschrieben wurden. Ein Fachmann kann jedoch der vorangehenden Beschreibung und der folgenden Beschreibung entnehmen, dass, außer es wird anders beschrieben, zusätzlich zu jeder Kombination von Merkmalen, die zu einer Kategorie von Gegenständen gehört, auch jede Kombination zwischen Merkmalen als von diesem Text offenbart angesehen wird, die sich auf unterschiedliche Kategorien von Gegenständen bezieht. Insbesondere sollen Kombinationen zwischen Merkmalen von Vorrichtungsansprüchen und Merkmalen von Verfahrensansprüchen offenbart sein.

Kurze Beschreibung der Figuren

Im Folgenden werden weitere exemplarische Ausführungsbeispiele der vorliegenden Erfindung mit Verweis auf die Figuren beschrieben.

Fig. 1 zeigt eine Anordnung eines Füllstandmessgeräts an einem Behälter zum besseren Verständnis der vorliegenden Erfindung.

Fig. 2 zeigt drei verschiedene Skalierungen einer Echokurve für die Echosignalverarbeitung zum besseren Verständnis der vorliegenden Erfindung.

Fig. 3 zeigt eine Anordnung zur Füllstandmessung samt Echokurve zum indirekten Bestimmen eines Füllstandes zum besseren Verständnis der vorliegenden Erfindung.

Fig. 4 zeigt eine Anordnung zur Füllstandmessung samt Echokurve mit einer Vielzahl von Mehrfachechos gemäß einem exemplarischen Ausführungsbeispiel der vorliegenden Erfindung.

Fig. 5 zeigt eine Anordnung zur Füllstandmessung samt Echokurve in einem Behälter mit aufgebautem Domschacht gemäß einem exemplarischen Ausführungsbeispiel der vorliegenden Erfindung.

Fig. 6 zeigt eine Anordnung zur Füllstandmessung samt Echokurve in einem offen Behälter gemäß einem exemplarischen Ausführungsbeispiel der vorliegenden Erfindung.

Fig. 7 zeigt ein Blockdiagramm eines Füllstandmessgeräts gemäß einem exemplarischen Ausführungsbeispiel der vorliegenden Erfindung.

Fig. 8 zeigt ein Flussdiagramm für ein Verfahren zur Füllstandmessung gemäß einem exemplarischen Ausführungsbeispiel der vorliegenden Erfindung.

Fig. 9 zeigt ein Flussdiagramm für ein Verfahren zum Bestimmen einer Kenngröße für die Lage einer Grenzfläche in einem Behälter gemäß einem exemplarischen Ausführungsbeispiel der vorliegenden Erfindung.

Detaillierte Beschreibung von Ausführungsbeispielen

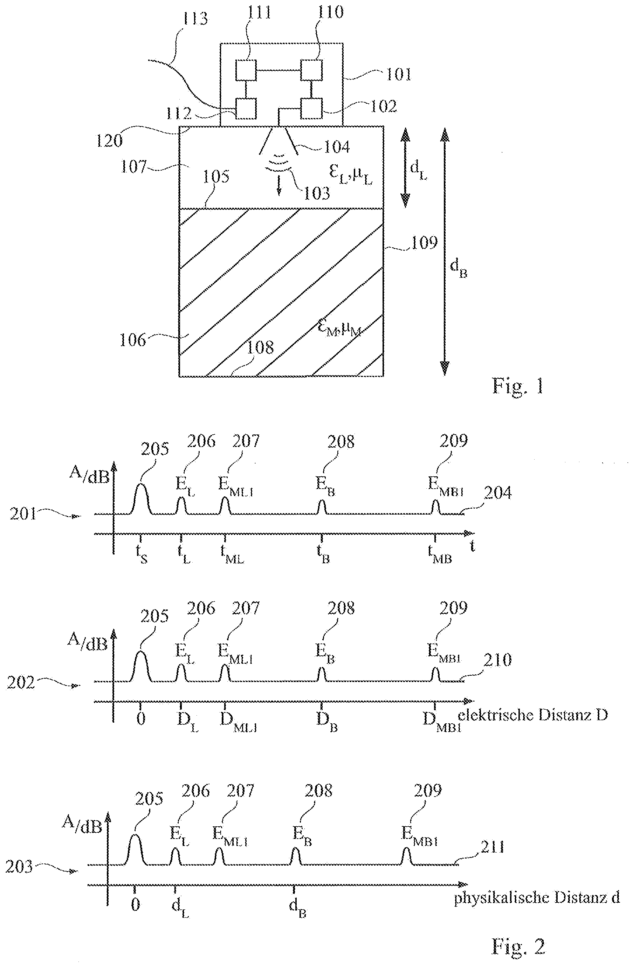

Die Darstellungen in den Figuren sind schematisch und nicht maßstäblich. In der folgenden Beschreibung der Fig. 1 bis Fig. 9 werden die gleichen Bezugsziffern für gleiche oder sich entsprechende Elemente verwendet.

Die vorliegende Erfindung kann zur Bestimmung der Position einer Füllgutoberfläche bei der Messung von Füllständen oder Abständen aller Art genutzt werden. Die mit der Auswertevorrichtung, mit dem Verfahren oder mit dem Füllstandmessgerät bestimmte Distanz zum Füllgut kann in analoger Form, z.B. über eine 4..20 mA Schnittstelle, oder auch in digitaler Form bereitgestellt werden, z.B. über einen Feldbus. Zum Bereitstellen kann eine externe Schnittstelle genutzt werden, über die weitere externe Geräte auf die Kenngröße für die Lage der Trennschicht oder Grenzschicht außerhalb der Auswertevorrichtung zugreifen können. Beispielsweise kann die Distanz der Trennschicht zu einem Füllstandmessgerät oder zu einer Bezugsfläche bereitgestellt werden. In anderen Worten kann die bestimmte Kenngröße an eine andere Vorrichtung zur Weiterverarbeitung weitergegeben werden.

Bei der Füllstandmessung in einem Behälter mag sich das zur Messung verwendete Signal auf dem Weg vom Füllstandmessgerät hin zur Füllgutoberfläche eines von einem Medium gebildeten Füllgutes im Einflussbereich eines weiteren Mediums bewegen, welches als Überlagerungsmedium bezeichnet werden kann. Dieses Überlagerungsmedium befindet sich zwischen dem Füllstandmessgerät und der Oberfläche des zu vermessenden Mediums, und wird im Allgemeinen durch eine Flüssigkeit oder eine gasförmige Atmosphäre dargestellt.

Oftmals befindet sich oberhalb des zu vermessenden Mediums Luft, während das Medium selbst ein Fluid oder Schüttgut sein kann. Da sich die Ausbreitung elektromagnetischer Wellen in Luft nur unwesentlich von der in Vakuum unterscheidet, bedarf es im Wesentlichen keiner besonderen Korrekturen der Signale, welche vom Füllgut, d.h. dem zu vermessenden Medium, den Behältereinbauten und dem Behälter selbst durch die Luft hindurch zum Füllstandmessgerät zurück reflektiert werden.

In Prozessbehältern der chemischen Industrie können beispielsweise verschiedene chemische Gase und Gasgemische als Überlagerungmedium auftreten. In Abhängigkeit von den physikalischen Eigenschaften dieser Gase oder Gasgemische werden die Ausbreitungseigenschaften elektromagnetischer Wellen im Vergleich zu einer Ausbreitung im Vakuum oder in Luft verändert.

Die nachfolgenden Ausführungen konzentrieren sich der Einfachheit halber im Wesentlichen auf die Betrachtung des häufig anzutreffenden Anwendungsfalls eines einzigen zu vermessenden Mediums oder Füllguts in einem Behälter. Ohne Einschränkung der Allgemeinheit, können die für diesen Fall angestellten Überlegungen auf den Anwendungsfall zweier oder einer Vielzahl verschiedener Medien oder Füllgüter in einem Behälter übertragen werden. Die Position einer Füllgutoberfläche mag im Zusammenhang mit einer Trennschichtmessung insbesondere auch die Position einer Trennschicht zwischen zwei unterschiedlichen und geschichteten Medien oder Füllgütern in einem Behälter sein, welche im Wesentlichen identisch ist mit der Position der Füllgutoberfläche des unteren oder des näher am Boden gelegenen der beiden Füllgüter oder Medien.

Zur Füllstandmessung haben sich verschiedene Verfahren herausgebildet, nach denen die Position einer Füllgutoberfläche in einem Behälter ermittelt werden kann.

Fig. 1 zeigt eine Anordnung zur Füllstandmessung zum besseren Verständnis der vorliegenden Erfindung. Der Behälter 109 ist bis zu einer Füllhöhe $d_B$ - $d_L$ mit einer Flüssigkeit 106 gefüllt. Der Abstand der Flüssigkeit 106 von der Behälterdecke 120 sei mit $d_L$ bezeichnet, der Abstand von der Behälterdecke 120 bis zum Behälterboden 108 sei mit $d_B$ bezeichnet. Die Behälterdecke stellt eine allgemeine Bezugsfläche dar, von der die Signale ausgesandt werden und an der die reflektierten Signal empfangen werden. Die Bezugsfläche mag eine Fläche sein, auf der sich der Füllstandsensor befindet. Die Bezugsfläche mag somit in einem Bereich einer Messanordnung liegen, ab dem ein reflektiertes Signal in elektronischer Form vorliegt und ab dem die Signalverarbeitung beginnt. Der Raum 107 über der Flüssigkeit 106, d.h. der Raum zwischen Behälterdecke 120 und der Flüssigkeitsoberfläche 105, sei beispielsweise mit Luft gefüllt. Im vorliegenden Beispiel der Fig. 1 wird die Flüssigkeit 106 mit Luft als Überlagerungsmedium bedeckt.

Das Füllstandmessgerät 101 erzeugt mit Hilfe einer Hochfrequenzeinheit 102 einen elektromagnetischen Impuls 103 und koppelt diesen in eine geeignete Antenne 104 ein, woraufhin sich dieser Impuls annähernd mit Lichtgeschwindigkeit in Richtung der zu vermessenden Füllgutoberfläche 105 ausbreitet. Die im Wesentlichen exakte Geschwindigkeit innerhalb des Überlagerungsmediums ergibt sich durch:

$$c_L = \frac{c_0}{\sqrt{\varepsilon_L \cdot \mu_L}} \quad (1)$$

wobei $c_0$ die Lichtgeschwindigkeit im Vakuum, $\varepsilon_L$ die Permittivitätszahl des Überlagerungsmediums und $\mu_L$ die Permeabilitätszahl des Überlagerungsmediums beschreibt. Die exakte oder tatsächliche Geschwindigkeit berücksichtigt somit die Veränderung der Vakuumlichtgeschwindigkeit in dem Überlagerungsmedium 107.

Die Füllgutoberfläche 105 reflektiert zumindest einen Teil der ankommenden Signalenergie, woraufhin sich der reflektierte Signalanteil wieder zurück zum Füllstandmessgerät 101 fortpflanzt. Der nicht reflektierte Signalanteil dringt in die Flüssigkeit 106 ein, und breitet sich darin mit stark verminderter Geschwindigkeit in Richtung des Behälterbodens 108 aus. Die Geschwindigkeit $c_M$ der elektromagnetischen Welle 103 innerhalb der Flüssigkeit 106 wird durch die Materialeigenschaften der Flüssigkeit 106 bestimmt:

$$c_M = \frac{c_0}{\sqrt{\varepsilon_M \cdot \mu_M}} \qquad (2)$$

wobei $c_0$ die Lichtgeschwindigkeit im Vakuum, $\varepsilon_M$ die Permittivitätszahl der Flüssigkeit und $\mu_M$ die Permeabilitätszahl der Flüssigkeit beschreibt. Am Boden 108 des Behälters 109 wird der verbliebene Signalanteil ebenfalls reflektiert, und gelangt nach entsprechender Laufzeit wieder zurück zum Füllstandmessgerät 101. Im Füllstandmessgerät werden die ankommenden Signale mit Hilfe eines Sensors empfangen und mit der Hochfrequenzeinheit 102 aufbereitet, und vorzugsweise in einen niederfrequenteren Zwischenfrequenzbereich (ZF) transformiert. Die Signale mögen in einer Ausführungsform als analoger Kurvenzug oder analoge Echokurve über ein bestimmtes Zeitintervall aufgezeichnet werden. Dieses Zeitintervall bestimmt einen Messzyklus. Mit Hilfe einer Analog-Digital-Wandlereinheit 110 werden die analogen Echokurven, welche von der Hochfrequenzeinheit 102 bereitgestellt werden, digitalisiert und einer Auswertevorrichtung 111 zur Verfügung gestellt.

Die vorgenannten Komponenten, welche zur Bereitstellung einer digitalisierten Echokurve genutzt werden, also insbesondere die Hochfrequenzeinrichtung 102 und die Analog-Digital-Wandlereinheit 110, mögen beispielhaft eine Echokurvenerfassungseinrichtung 102, 110 eines Fütlstandmessgeräts 101 definieren.

Bei der Ermittlung von Echokennwerten, beispielsweise der Lage eines Echos, kann zwischen einer groben Ermittlung und einer feinen Ermittlung unterschieden werden. Bei der groben Ermittlung mag im Wesentlichen nur eine ungefähre Lage eines Echos interessieren. Die grob ermittelten Werte können für schnelle Plausibilitätsüberprüfungen genutzt werden. Eine grobe Bestimmung kann mit reduzierter Rechenleistung durchgeführt werden. Sobald eine im Wesentlichen genau oder exakte Lage von Interesse ist, kann eine Feinbestimmung durchgeführt werden und eine im Wesentlichen exakte Lage ermittelt werden. Die Genauigkeit einer grob bestimmten Echoposition mag geringer als die Genauigkeit einer exakt bestimmten Echoposition sein. Dagegen mag die Ermittlungsgeschwindigkeit einer exakten Echoposition geringer als die Ermittlungsgeschwindigkeit einer groben Echoposition sein.

Die Auswertevorrichtung 111 analysiert die digitalisierte Echokurve, und bestimmt auf Basis der darin enthaltenen Echos nach unterschiedlichen Verfahren der Echoauswertung dasjenige Echo, das von der Reflektion an der Füllgutoberfläche 105 direkt erzeugt wurde. Zudem bestimmt die Auswertevorrichtung 111, welche in vorliegendem Beispiel auch als Vermessungseinrichtung 111 dienen mag, die im Rahmen der Messgenauigkeit liegende exakte elektrische Distanz bis zu diesem Echo. Weiterhin wird die ermittelte elektrische Distanz zum Echo derart korrigiert, dass Einflüsse des Überlagerungsmediums 107 auf die Ausbreitung der elektromagnetischen Wellen kompensiert werden, wodurch physikalische Distanzwerte bereitgestellt werden können. Die so errechnete, kompensierte Distanz zum Füllgut wird einer Ausgabeeinrichtung 112 übergeben, welche den bestimmten Wert entsprechend den Vorgaben des Benutzers weiter aufbereitet, beispielsweise durch Linearisierung, Offsetkorrektur, Umrechnung in eine Füllhöhe $d_B$ - $d_L$. Der aufbereitete Messwert wird an einer externen Kommunikationsschnittstelle 113 nach außen hin bereitgestellt. Hierbei können alle etablierten Schnittstellen verwendet werden, insbesondere 4..20mA - Stromschnittstellen, industrielle Feldbusse wie HART, Profibus, FF (Fieldbus Foundation), $I^2C$ oder aber auch Computerschnittstellen wie RS232, RS485, USB, Ethernet, FireWire.

Fig. 2 verdeutlicht im Detail drei Schritte, die im Rahmen der Echosignalverarbeitung in der Auswerteeinrichtung 111 zur Kompensation der Einflüsse verschiedener Medien angewendet werden.

Diesen Schritten entsprechen drei Kurvenzüge von Echokurven. Der Kurvenzug 201 zeigt die von der Analog-Digital-Wandlereinheit 110 über der Zeit t hinweg erfasste digitalisierte Echokurve 204. Insbesondere zeigt der Kurvenzug eine Echokurve über einem Messzyklus. Der Kurvenzug 201 zeigt die aufgenommenen Signalamplituden in dB gegenüber einer Zeitskalat. Die Echokurve 201 beinhaltet zunächst den innerhalb der Antenne reflektierten Anteil des Sendeimpulses 205, der auch als Antennen-Klingeln 205 bezeichnet wird. Kurze Zeit später wird zum Zeitpunkt $t_L$ ein erstes Echo 206 erfasst welches durch die Reflexion von Signalanteilen an der Grenzfläche 105, der Trennfläche 105 oder Oberfläche 105 des Mediums 106 im Behälter verursacht wird. Eine weiteres Echo 207 entsteht als erstes Vielfachecho $E_{ML1}$ des Füllgutechos 206, und wird zum Zeitpunkt $t_{ML}$ erfasst. Die in das Medium 106 eindringenden Signalanteile werden nach Durchlaufen des Füllguts 106 am Behälterboden 108 reflektiert, und erzeugen ein weiteres Echo 208 innerhalb der Echokurve 204. Dieses Bodenecho 208 wird zum Zeitpunkt $t_B$ erfasst. Weiterhin möge zum Zeitpunkt $t_{MB}$ ein Vielfachecho 209 des Bodenechos erfasst werden.

In einem ersten Verarbeitungsschritt wird die zeitabhängige Kurve 201 in eine distanzabhängige Kurve 202 transformiert. Während dieser Transformation wird davon ausgegangen, dass sich die erfasste Kurve im Wesentliche durch eine Ausbreitung im Vakuum gebildet hat. Die Ordinate der Darstellung 201 wird durch Multiplikation mit der Lichtgeschwindigkeit im Vakuum in eine Distanzachse umgerechnet, beispielsweise in der Einheit m. Zudem wird durch Verrechnung eines Offsets erreicht, dass das von der Antenne 104 verursachte Echo 205 den Distanzwert 0m erhält. Weiterhin werden die Distanzwerte mit dem Faktor 0,5 multipliziert, um den doppelten Weg hin zur Füllgutoberfläche 105 und zurück zu eliminieren.

Die zweite Darstellung 202 zeigt die Echokurve 210 als Funktion der elektrischen Distanz D. Die elektrische Distanz entspricht der halben Distanz, die eine elektromagnetische Welle im Vakuum in einer bestimmten Zeit zurücklegt. Die elektrische Distanz berücksichtigt im Wesentlichen keinerlei Einflüsse eines Mediums, welche möglicherweise zu einer langsameren Ausbereitung der elektromagnetischen Wellen führen. Der Kurvenzug 202 stellt daher eine unkompensierte, aber auf Orte bezogene Echokurve dar.

In dem vorliegenden Text werden elektrische Distanzen mit Großbuchstaben D bezeichnet, wohingegen physikalische Distanzen, welche direkt am Behälter nachgemessen werden können, mit kleinen Buchstaben d bezeichnet werden.

Es mag weiterhin möglich sein, die Echokurve 210 vollständig zu kompensieren, um die unterschiedliche Ausbreitungsgeschwindigkeit in verschiedenen Medien zu berücksichtigen. Die dritte Darstellung 203 zeigt eine vollkompensierte Echokurve 211. Um eine Darstellung der Echos über der physikalischen Distanz zu erreichen, wird im vorliegenden Fall der Einfluss des Überlagerungsmediums 107 im Bereich zwischen den Orten 0 und $D_L$ des Kurvenzugs 202 berücksichtigt. Der Ort 0 kann sich auf die Bezugsfläche 120 beziehen, oder aber auch auf einen vom Kunden spezifizierten und eingegebenen Nullpunkt der Messung. Dieser Nullpunkt kann beispielsweise als Umgebungsparameter bereitgestellt werden. Die elektrischen Distanzangaben $D_i$ der Abszisse, die zwischen 0 und $D_L$ liegen, werden in physikalische Distanzangaben $d_i$ gemäß folgendem Zusammenhang umgerechnet:

$$d_i = \frac{D_i}{\sqrt{\varepsilon_L \cdot \mu_L}} \quad (3)$$

Da $\varepsilon_L$ und $\mu_L$ von Luft in guter Näherung dem Wert 1 entsprechen, muss für diesen Abschnitt von 0 bis $D_L$ im vorliegenden Beispiel im Wesentlichen keine Korrektur erfolgen. Die elektrischen Distanzangaben der Abszisse größer oder gleich $D_L$ (elektrische Distanz der Füllgutoberfläche 105) werden jedoch in physikalische Distanzangaben gemäß folgendem Zusammenhang umgerechnet:

$$d_i = d_L + \frac{(D_i - D_L)}{\sqrt{\varepsilon_M \cdot \mu_M}} \quad (4)$$

Die dritte Darstellung 203 der Echokurve zeigt schließlich den korrigierten Verlauf oder vollkompensierten Verlauf. Sowohl die Distanz $d_L$ zum Echo 206 der Füllgutoberfläche 105 als auch die Distanz $d_B$ zu dem vom Behälterboden 108 erzeugten Echo 208 stimmen mit den am Behälter 109 nachmessbaren Distanzen überein. Die Distanz zum Mehrfachecho 207 der Füllgutoberfläche, insbesondere zu den Mehrfachechos einer höhreren Ordnung als 0, kann nicht direkt am Behälter nachgemessen werden, da obige Kompensation nur für direkte Reflektionen gültig ist. Gleiches gilt für das Mehrfachecho 209 der Reflektion am Behälterboden 108.

Es sei an dieser Stelle darauf hingewiesen, dass die Umsetzung in Kurvenzug 202, also die Bestimmung der elektrischen Distanzen oder der Position verschiedener Echos, im Rahmen der Signalverarbeitung im Gerät im Wesentlichen für alle Echos durchgeführt werden kann. Die Umsetzung der auf die elektrische Distanz skalierte Echokurve 210 in eine kompensierte Echokurve 211 wird im Allgemeinen nicht durchgeführt, genügt doch die Korrektur eines einzelnen Distanzwertes oder der Position eines Echos. In anderen Worten, kann Rechenleistung eingespart werden, wenn nicht alle Werte einer Echokurve vollkompensiert werden sondern lediglich die Positionswerte, die tatsächlich von Interesse sind.

Für den Anwendungsfall aus Fig.1 ergeben sich in Bezug auf die Distanz $d_L$ zwischen dem Sensor des Füllstandmessgeräts 101 und Füllgutoberfläche 105 aufgrund vorab bekannter Werte für die Permittivitätszahl und die Permeabilitätszahl der Luft in der praktischen Anwendung keine wesentlichen Probleme. In dem vorliegenden Text wird grundsätzlich davon ausgegangen, dass die Eigenschaften der im Behälter befindlichen Medien, insbesondere die Permeabilitätszahlen und die Permittivitätszahlen, innerhalb des Gerätes 101 bekannt sind, beispielsweise nach Eingabe durch den Anwender, beispielsweise mittels einer in Fig. 1 nicht gezeigten Eingabeeinrichtung für Umgebungsparameter.

Neben einer manuellen Eingabe der Umgebungsparameter können mittels unterschiedlicher Verfahren oder Sensoren diese Kenngrößen automatisch ermittelt werden, so kann beispielsweise die Höhe $d_B$ des Behälters 109 automatisch bestimmt werden. Diese Verfahren zur automatisierten Bestimmung der Kenngrößen kann in Kombination mit dem Verfahren zur Ermittlung der Kenngröße für die Lage der Trennschicht eingesetzt werden.

Außerdem kann die Lage $d_L$ des von der Oberfläche 105 des Füllgutes 106 verursachten Echos durch Bestimmung der Position des vom Behälterboden 108 verursachten Echos 208 ermittelt werden.

Die physikalische Distanz $d_L$ zur Oberfläche 105 des zu vermessenden Mediums 106 kann auch bei nicht vorhandenem direkten Echo $E_L$ 206 der Füllgutoberfläche 105 auf Basis der elektrischen Distanz $D_B$ des Bodenechos $E_B$ 208 indirekt ermittelt werden durch:

$$d_L = \frac{d_B \cdot \sqrt{\varepsilon_M \cdot \mu_M} - D_B}{\sqrt{\varepsilon_M \cdot \mu_M} - \sqrt{\varepsilon_L \cdot \mu_L}} \qquad (5)$$

Der dargelegte Sachverhalt kann in speziellen Fällen verwendet werden, beispielsweise wenn das Hauptecho $E_L$ 206 von einer anderen Reflexion überdeckt wird.

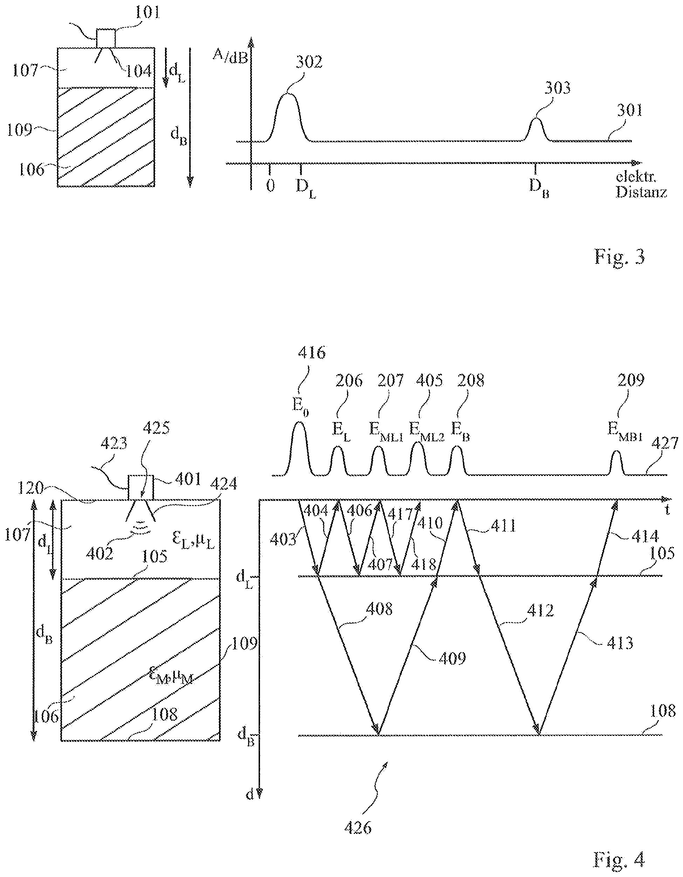

Fig. 3 stellt die Verwendung einer indirekten oder mittelbaren Bestimmung der Lage der Füllgutoberfläche 105 anhand eines Bodenechos $E_B$ dar. Der in Fig. 3 dargestellte Behälter 109 ist nahezu vollständig mit dem Füllgut 106 gefüllt, d.h. $d_L$ ist sehr gering. Die vom Füllstandmessgerät 101 erfasste Echokurve 301 weist neben dem von der Antenne 104 erzeugten Echo 302 lediglich das vom Behälterboden erzeugte Bodenecho 303 auf. Das von der Oberfläche des Mediums 106 erzeugte Echo kann anhand der erfassten Echokurve 301 nicht sicher erfasst werden, da es im Einflussbereich des Antennenechos 302 von diesem komplett überdeckt wird. In anderen Worten, das direkte Echo ist nicht sichtbar. Mit Hilfe einer direkten Echomessung, lässt sich die Entfernung $d_L$ zur Füllgutoberfläche nicht zufriedenstellend ermitteln. Unter Verwendung des oben dargestellten Sachverhaltes aus Formel (5) lässt sich jedoch aus der aus der Echokurve 301 ermittelbaren elektrischen Distanz $D_B$ die Lage des Füllstandes indirekt, also mittelbar, aus der Lage eines Bodenechos 303 im Wesentlichen exakt ermitteln.

In einer Vielzahl praktischer Anwendungen stößt das oben dargestellte Verfahren jedoch an seine Grenzen. Aufgrund der großen Dämpfung innerhalb des Mediums 106 kann mit zunehmender Füllhöhe des Mediums 106 im Behälter 109 das Signal in seiner Amplitude und somit das registrierte Echo immer kleiner werden, was zur Folge haben kann, dass das Bodenecho 303 anhand der Echokurve 301 nur noch schwer identifiziert werden kann, bis zu einem Ausmaß, dass es nicht mehr sichtbar ist Das Füllstandmessgerät mag infolge des schwachen Signals nicht mehr in der Lage sein, die Distanz zur Oberfläche des Füllguts mittels Bodenechos zu ermitteln.

Ein Aspekt der vorliegenden Erfindung mag sein, eine robuste Methode zur Bestimmung der Lage einer Füllgutoberfläche bereitzustellen. Es mag ein Kernaspekt der vorliegenden Erfindung sein, die in einer erfassten Echokurve enthaltenen Mehrfachechos auszuwerten. In anderen Worten mag eine mittelbare Messung von Mehrfachechos genutzt werden um eine Position einer Füllgutoberfläche oder Trennschicht zu bestimmen. Es mag somit ein Verfahren bereitgestellt werden, das die Lage einer Grenzschicht bestimmen kann, wenn andere Verfahren keine vernünftigen Ergebnisse mehr liefern.

Fig. 4 verdeutlicht die Zusammenhänge, welche zur Ausbildung von Mehrfachechos führen mögen.

Das erfindungsgemäße Füllstandmessgerät 401 ist mit seinem Sensor 425 auf der Bezugsfläche 120 angeordnet. Der Sensor 425 nutzt die Antenne 424 des Füllstandmessgeräts 401, für die gerichtete Ausbreitung des von dem Sensor erzeugten Signals 402 und hilft dem Sensor 425 reflektierte Signale zu empfangen. Das Füllstandmessgerät 401, insbesondere der Sensor 425, erzeugt einen elektromagnetischen Impuls 402 und sendet diesen in Richtung der zu vermessenden Füllgutoberfläche 105 aus. Der Signalpfeil 403 in dem Zeit-Orts-Diagramm 426 skizziert die Ausbreitung des Signals als Funktion der physikalischen Distanz d über der Zeit t. Die Zeit-Echokurve gibt die unkompensierte Echokurve über der Zeit an, die auf eine kompensierte Echokurve über der physikalischen Distanz d abgebildet werden kann.

An der Oberfläche 105 des Füllgutes 106, welche eine Grenzfläche 105 oder Trennfläche 105 des Füllgutes 106 zur überlagerten Atmosphäre 107 bildet, wird ein Teil des Sendesignals 402 reflektiert und gelangt nach entsprechender Laufzeit zurück zum Füllstandmessgerät 401. Der Signalpfad 404 verdeutlicht diesen Ausbreitungsweg. Das Füllstandmessgerät 401 bildet aufgrund der empfangenen Signale eine Echokurve 427, welche bedingt durch die Signalpfade 403 und 404 ein erstes Echo $E_L$ 206, direktes Echo $E_L$ 206, ein Mehrfachecho 0ter Ordnung $E_L$ 206 oder Hauptecho $E_L$ 206 aufweist. Ein Teil der Signale wird beispielsweise an der Behälterdecke 120 oder am Füllstandmessgerät 401 erneut reflektiert, und breitet sich erneut in Richtung der Füllgutoberfläche 105 aus, was durch den Signalpfeil 406 angedeutet wird. Dieser Signalanteil wird von der Füllgutoberfläche erneut reflektiert, und gelangt nach entsprechender Laufzeit zurück zum Füllstandmessgerät 401, wo er als erstes Mehrfachecho $E_{ML1}$ 207 der Füllgutreflexion $E_L$ 206 erfasst und auf die Echokurve 427 als Amplitudenerhöhung 207 oder Peak 207 abgebildet wird. Der Signalpfad 407 verdeutlicht den Vorgang der Entstehung des ersten Mehrfachechos $E_{ML1}$.

Ein Teil 408 der abgestrahlten Signalenergie 402, welcher nicht an der Füllgutoberfläche 105 reflektiert wird, dringt in das Medium 106 ein und breitet sich in diesem in Richtung des Behälterbodens 108, welcher ebenfalls eine Grenzfläche des Mediums oder Füllgutes definiert, mit verminderter Geschwindigkeit weiter aus. Am Behälterboden 108 wird das Signal 408 reflektiert, und gelangt nach entsprechender Laufzeit zurück zum Füllstandmessgerät 401, Die Signalpfade 403, 408, 409 und 410 verdeutlichen die Ausbreitung des Signals auf diesem Pfad des Bodenechos $E_B$. Es ist zu beachten, dass sich das Signal in den verschiedenen Medien 107, 106 mit unterschiedlichen Geschwindigkeiten ausbreitet, was sich im Signalpfaddiagramm durch unterschiedliche Steigungen der Signalpfade 409, 410 erkennen lässt. Das Füllstandmessgerät 401 empfängt die vom Behälterboden 108 reflektierten Signalanteile, und bildet diese in Form eines Bodenechos $E_B$ 208 in der Echokurve 427 ab.

Entsprechend der Bildung von Mehrfachechos 207 des Füllstandechos 206 kann unter günstigen Verhältnissen auch die Ausbildung eines oder mehrerer Mehrfachechos $E_{MB1}$, $E_{MB2}$ ($E_{MB2}$ ist in Fig. 4 nicht dargestellt) des Bodenechos $E_B$ beobachtet werden. Die Signalpfade 411, 412, 413, 414 verdeutlichen das Zustandekommen eines ersten Mehrfachechos $E_{MB1}$ 209 des Bodenechos $E_B$ 208, welches sich in der vom Füllstandmessgerät 401 empfangenen Echokurve 427 nach entsprechender Laufzeit ebenfalls abbildet.

Die Grenzfläche 105 eines Mediums oder Füllguts mag im Kontext der vorliegenden Erfindung beispielsweise die Oberfläche eines Füllgutes sein. Die Grenzfläche eines Füllguts mag auch die Trennschicht oder die Trennfläche am Übergang zu einem weiteren Füllgut mit anderen Materialeigenschaften im Behälter sein. Weiterhin mag die Grenzfläche eines Füllguts der Übergang vom Füllgut zum Behälterboden 108 sein.

Grundsätzlich ist es möglich, Mehrfachechos höherer Ordnung zu konstruieren. Das Signalpfaddiagramm 426 zeigt hierzu andeutungsweise die Signalpfade 417 und 418, welche geeignet sind, ein Mehrfachecho zweiter Ordnung $E_{ML2}$ bezogen auf die Reflektion der Füllgutoberfläche 105 zu erzeugen. Entsprechende Mehrfachechos höherer Ordnung sind auch für die Reflektion des Behälterbodens möglich. Ohne Einschränkung der Allgemeinheit wird im Folgenden im Wesentlichen auf Mehrfachechos erster Ordnung eingegangen. Mit den oben beschriebenen Prinzipien lassen sich die Überlegungen, die anhand der Mehrfachechos erster Ordnung dargestellt werden, auf Mehrfachechos höherer Ordnung übertragen.

Die Ordnung eines Mehrfachechos sei definiert als die Anzahl der Reflexionen eines ausgesendeten Signals an einer Medienoberfläche eines im Behälter zu messenden Füllguts, reduziert um den Wert 1. Das Echo $E_L$ 206 ist entsprechend dieser Nomenklatur identisch einem Mehrfachecho 0. Ordnung, wohingegen das Echo $E_{ML1}$ 207 identisch einem Mehrfachecho 1. Ordnung ist und das Echo $E_{ML2}$ 405 identisch einem Mehrfachecho 2. Ordnung ist.

Weiterhin sind auch gemischte Signalpfade denkbar, welche zu weiteren Echos innerhalb der empfangenen Echokurven führen. So mag es beispielsweise möglich sein, dass das Signal nach Durchlaufen des Signalpfades 406 in das Medium eindringt, und sich in Richtung des Behälterbodens ausbreitet, Weiterhin mag es beispielsweise auch möglich sein, dass ein Teil der Signalenergie nach Durchlaufen des Signalpfades 411 von der Füllgutoberfläche reflektiert wird, und sich wieder direkt in Richtung des Füllstandmessgerätes ausbreitet. Gemischte Signalpfade sollen im Rahmen der vorliegenden Erfindung nur insoweit weiter betrachtet werden, als sie detektiert werden können. Da die Schritte der vorliegenden Erfindung, welche anhand der Mehrfachechos erster Ordnung dargestellt werden, auf gemischte Mehrfachechos übertragen werden können, soll hier nicht näher auf gemischte Mehrfachechos eingegangen werden. Gemischte Mehrfachechos seien im vorliegenden Kontext definiert als Echos einer Echokurve, welche durch Signalpfade verursacht werden, die zumindest zwei Reflexionen an zumindest zwei unterschiedlichen Grenzflächen von einem Füllgut aufweisen. In anderen Worten mag der Signalpfad eines von einem Füllstandmessgerät erzeugten Signals an zumindest zwei unterschiedlichen Grenzflächen eines Füllgutes in einem Behälter reflektiert werden. Wegen der Übersichtlichkeit sind die gemischten Mehrfachechos in Fig. 4 nicht eingezeichnet.

Während die Anordnung nach Fig. 4 von einer Anbringung des Füllstandmessgeräts 401 insbesondere des Sensors 425 im Wesentlichen an der Behälterdecke 120 ausgeht, kann das Füllstandmessgerät 401 und insbesondere die Auswertevorrichtung auch in oder an Behältern mit einem aufgebauten Domschacht zum Einsatz kommen.

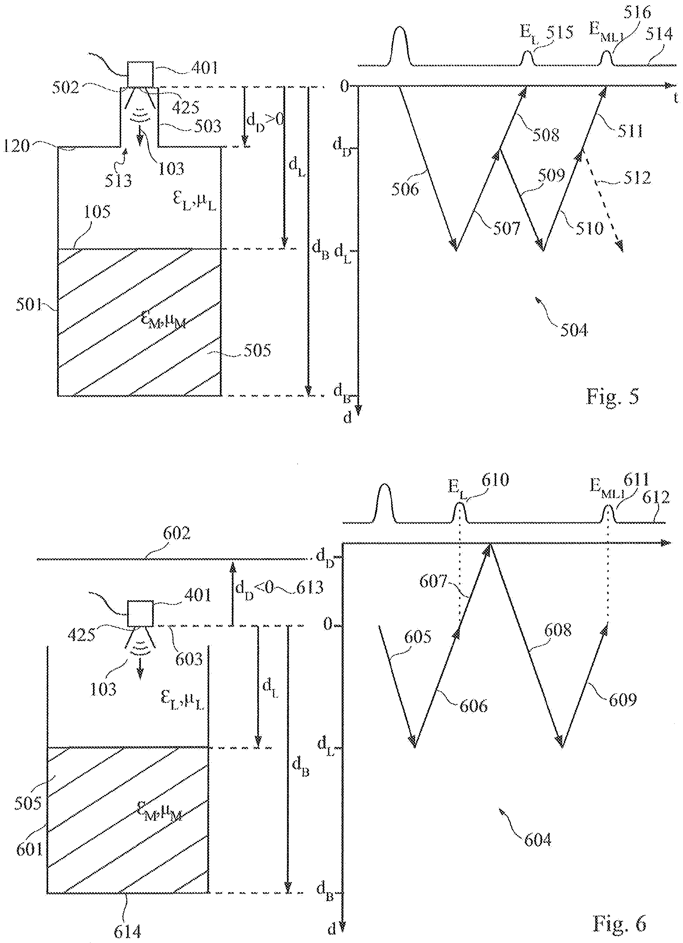

Die Fig. 5 zeigt ein exemplarisches Ausführungsbeispiel für den Einsatz des erfindungsgemäßen Messgerätes 401 in einem solchen Behälter 501 mit einem aufgebauten Domschacht 503, Das Füllstandmessgerät 401 wird nicht direkt auf Höhe der Behälterdecke 120 montiert, sondern befindet sich in einem Domschacht 503 an der Domschachtdecke 502. Der Domschacht weist eine physikalische Länge von $d_D > 0$ auf Die Montageposition des Föllstandmessgerätes im oder auf dem Domschacht 503 kann die Ausbildung von Vielfachechos oder Mehrfachechos beeinflussen. Der Sensor 425 wird auf der Höhe der Domschachtdecke 502 eingebaut und bestimmt somit die Bezugsebene 502 für die Distanzmessung. Diese Verlagerung der Bezugsebene kann in einem Offset berücksichtigt werden. Insbesondere fällt die Reflexionsebene 120 im Wesentlichen nicht mehr mit der Messebene 502 oder Bezugsebene 502 zusammen. Der Domschacht kann rechteckförmig oder zylinderförmig ausgebildet sein. Das Signalpfaddiagramm 504 verdeutlicht die Ausbildung von Mehrfachechos im vorliegenden Fall Das vom Füllstandmessgerät 401 erzeugte Signal 103 breitet sich zunächst durch den Domschacht 503 und den eigentlichen Behälter hin zur Oberfläche 105 des Mediums 505 aus. Der Signalpfad 506 verdeutlicht diesen Ausbreitungsweg. Das Medium reflektiert das Signal, woraufhin sich dieses in Richtung des Füllstandmessgerätes 401 fortpflanzt. Da die Öffnung 513 des Domschachtes 503 im Verhältnis zur Behälterdecke 120 klein ist, wird nur ein sehr kleiner Teil des Signals als Füllstandecho $E_L$ 515 auf die Echokurve 514 abgebildet. Die Signalpfade 507 und 508 verdeutlichen diesen Vorgang. Der weitaus größere Teil der Signalenergie wird an der Behälterdecke 120 reflektiert und gelangt ggf. gedämpft über den Signalpfad 509 erneut zur Füllgutoberfläche 105. Auf diese Weise bildet sich nach Passage der Signalpfade 509, 510, und 511 ein erstes Vielfachecho $E_{ML1}$ 516 auf die Echokurve 514 ab. Die vorgestellten Zusammenhänge für Domschächte gelten entsprechend auch für die Vielfachechos höherer Ordnung, was durch den Signalpfad 512 angedeutet wird, aber auch für die Vielfachechos der Bodenreflektion.

In industriellen Anwendungen finden sich darüber hinaus auch Konstellationen, die durch die Einführung einer negativen Domschachtlänge die Bestimmung von Mehrfachechos erlauben. Die Fig. 6 zeigt einen zugehörigen Anwendungsfall. Das erfindungsgemäße Füllstandmessgerät 401 wird oberhalb eines nach oben offenen Behälters 601 montiert, wobei sich die gesamte Messanordnung beispielsweise in einer Halle befindet, so dass sich über der Anordnung eine Reflexionsfläche 602 befinden möge, beispielsweise in Form eines metallischen Flachdachs 602. In anderen Worten wird das Füllstandmessgerät 401 samt Sensor 425 auf einer in einer Signalaussenderichtung der Oberfläche eines Füllgutes 505 entgegengesetzten Seite eines Behälters 601 außerhalb der Behältergeometrie angebracht. Der Behälter 601 ist in der Richtung zum Füllstandmessgerät 401 offen, d.h. deckellos ausgebildet. Diese offene Ausführung des Behälters 601 erlaubt es dem Füllstandmessgerät 401 auch bei einer Anbringung außerhalb des Behälters 601, das Signal 103 auf die Oberfläche des Füllgutes 505 auszusenden. Dazu ist das Füllstandmessgerät so angeordnet, dass sich ein ausgesendetes Signal 103 im Wesentlichen senkrecht auf die Oberfläche des Füllgutes 505 zu bewegt. Der Einbauort des Füllstandmessgeräts 401 in vertikaler Richtung, also in einer Ebene entlang der Signalausbreitung, bestimmt eine Bezugsebene 603 auf Höhe des Sensors 425. Die Bezugsebene verläuft im Wesentlichen senkrecht zu einer Signalausbreitungsrichtung. Die Bezugsebene kann im Wesentlichen an einer Unterseite eines Füllstandmessgeräts angeordnet, d.h. auf der Seite eines Sensors des Füllstandmessgeräts. Der Einbauort des Sensors bestimmt die Lage der Bezugsebene 603. Das Füllstandmessgerät und somit auch der Sensor 425 sind zwischen dem Füllgut 505 und der Reflexionsebene 602 angeordnet. Der Abstand $d_D$ der Bezugsebene 603 des Füllstandmessgerätes 401 vom Hallendach 602 wird im Ablauf der Signalverarbeitung des Füllstandmessgerätes 401 als negative Domschachtlänge 613 mit einer physikalischen Länge von $d_D < 0$ berücksichtigt, Die Anordnung aufweisend das Füllstandmessgerät, den Behälter und das Hallendach mag daher im Kontext der vorliegenden Erfindung einen Domschacht aufweisen, wobei dieser eine negative Länge besitzen möge. In anderen Worten mag sich bei einer Anordnung eines Füllstandmessgeräts 401 zwischen einem offenem Behälter und einer Reflexionsebene 602, der Abstand der Reflexionsebene 602 zu der Bezugsebene als eine negative Domschachtlänge $d_D$ betrachten lassen.

Werden vom Füllstandmessgerät 401 nun Messungen vorgenommen, so ergeben sich Signalpfade gemäß der Darstellung des Signalpfaddiagramms 604. Die direkte Reflektion der Füllgutoberfläche, welche durch die Signalpfade 605 und 606 verdeutlicht wird, bildet sich in der Echokurve als Füllstandecho $E_L$ 610 ab. Das Signal 606 erreicht das Füllstandmessgerät 401 bevor es sich als Signal 607 weiter zur Reflexionsfläche 602 ausbreitet. Der weitaus größere Teil der Signalenergie breitet sich bis zum Hallendach 602 aus, wird von diesem reflektiert und führt nach erneuter Reflektion an der Füllgutoberfläche zum ersten Mehrfachecho $E_{ML1}$ 611 innerhalb der Echokurve 612. Die Signalausbreitung, welche zu diesem Echo führt, wird durch die Signalpfade 607, 608 und 609 angedeutet.

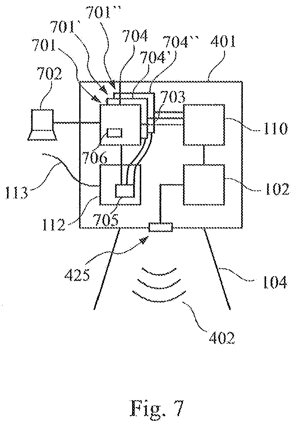

Der interne Aufbau eines erfindungsgemäßen Füllstandmessgerät 401 wird in Fig. 7 genauer dargestellt. Der Sensor 425 zum Senden und Empfangen des Signals 402 ist mit der Hochfrequenzeinheit 102 verbunden, die selbst wieder mit der Analog-Digital-Wandlereinheit (A/D~Wandler) 110 verbunden ist. Ein von dem A/D-Wandler digitalisiertes Signal, insbesondere eine Echokurve, wird der Echokurvenauswerteeinrichtung 704 einer Auswertevorrichtung 701 Über eine Empfangseinrichtung 703 zur Verfügung gestellt, beispielsweise über eine Feldgeräteschnittstelle 703 oder über eine Meßgeräteschnittstelle 703. Das Füllstandmessgerät kann eine Vielzahl von Auswertevorrichtungen mit weiteren Echoauswerteeinrichtungen 704', 704" aufweisen, die nach unterschiedlichen Prinzipien arbeiten. Umgebungsparameter erhält die Echokurvenauswerteeinrichtung 704 beispielsweise über die Eingabeeinrichtung 702 und/oder eine Selbstlerneinrichtung. Die Echokurvenauswerteeinrichtung 704 stellt die von ihr bestimmte Kenngröße für die Lage der Grenzfläche über die Ausgabeeinrichtung 112 zur Verfügung. Zur Bereitstellung der Kenngröße für die Lage der Grenzfläche an eine Weiterverarbeitungsvorrichtung (nicht gezeigt in Fig. 7) kann die Ausgabeeinrichtung 112 eine externe Schnittstelle 113 aufweisen. Sowohl über die Ausgabeeinrichtung 112 als auch über die externe Schnittstelle 113 kann ein Qualitätsparameter weitergegeben werden, der die Güte des Messergebnisses bereitstellt. Damit kann eine Entscheidungseinrichtung 705 versorgt werden, die die Kenngröße für den Füllstand aus einer Vielzahl von verschiedenen Echoauswerteeinrichtungen 704, 704', 704" bestimmt. Die Entscheidungseinrichtung 705 kann ein Teil der Ausgabeeinrichtung 112 sein und als Vorverarbeitungseinrichtung dienen, bevor die Kenngröße über die externe Schnittstelle 113 bereitgestellt wird. Zum Speichern von Echokurven, insbesondere für die Echoverfolgung, kann die Auswertevorrichtung 701 eine Speichereinrichtung (nicht gezeigt in Fig. 7) und eine Trackingeinrichtung 706 aufweisen.

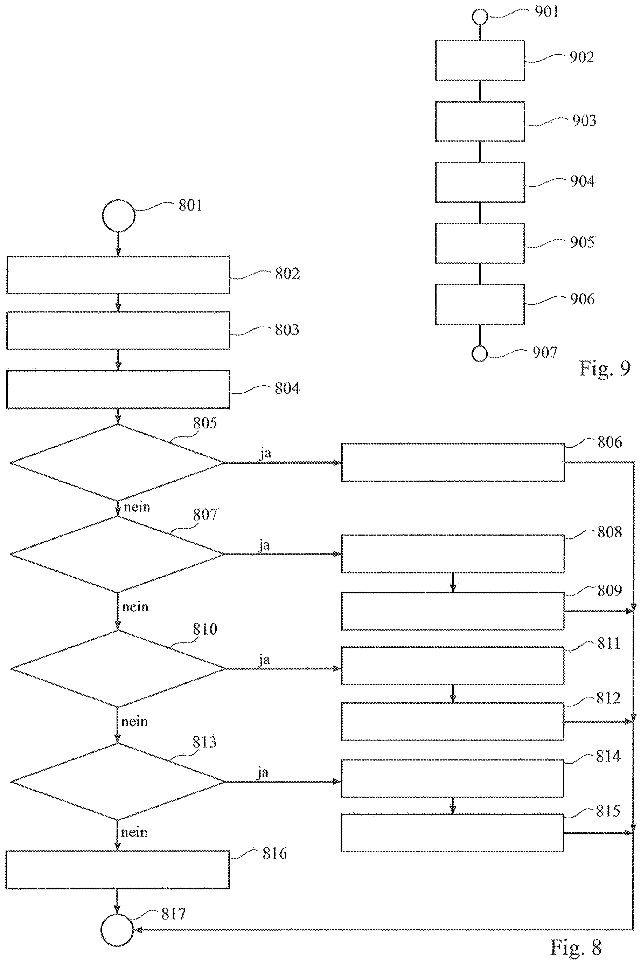

Fig. 8 zeigt ein Ablaufdiagramm, nach dem das Füllstandmessgerät 401 die Lage einer Füllgutoberfläche im Behälter ermitteln kann.

Das Füllstandmessgerät 401 beginnt einen Durchlauf im Schritt 801. Im Schritt 802 wird mit Hilfe der Hochfrequenzeinheit 102 und des Analog-Digital-Wandlers 110 eine Echokurve erfasst, und in digitaler Form an eine weitere Auswertevorrichtung 701', 701" übergeben, die beispielsweise nach dem Prinzip der direkten Echoauswertung arbeitet

Die weitere Auswertevorrichtung identifiziert mit der weiteren Echoauswerteeinrichtung 704' in einem darauffolgenden Schritt 803 die in der Echokurve 204 enthaltenen Echos 206, 207, 208, 209. Bei der Identifizierung der Echos mag noch keine Unterscheidung anhand eines Typs des Echos gemacht werden. Es werden bei der Echoidentifizierung erste Echokennwerte bestimmt, beispielsweise Anfang und Ende eines jeden Echos, die Amplitude des Echos oder aber auch die ungefähre Position des jeweiligen Echos, Weiterhin können weitere oder auch veränderte Kennwerte der identifizierten Echos bestimmt werden. Die bei der Echoidentifizierung bestimmten Kennwerte werden beim Festlegen der Echos genutzt. Die Echoidentifizierung kann in einem alternativen Beispiel in der Empfangseinrichtung 703 durchgeführt werden.

Im Schritt 804 identifiziert die weitere Auswertevorrichtung 701', 701" des Füllstandmessgerätes 401 das von der Oberfläche 105 des Mediums 106 direkt verursachte Füllstandecho 206. In anderen Worten wird im Schritt 804 das Grenzschichtecho, insbesondere das Füllstandecho, festgelegt. Es wird also das Echo identifiziert, welches von der gesuchten Grenzschicht direkt verursacht wird Für das Festlegen oder Identifizieren des Grenzschichtechos oder des Füllstandechos können verschiedene Methoden zur Identifikation des Füllstandechos verwendet werden. Sollen mehr als ein einziges Grenzschichtecho bestimmt werden, so kann die entsprechende Anzahl an direkten Grenzschichtechos bestimmt werden, die der Anzahl der Grenzschichten entspricht, die bestimmt werden sollen. Beispielsweise kann ein Füllstandecho und ein Echo einer Grenzschicht zwischen unterschiedlichen Materialien bestimmt werden. Da die Grenzschichtechos oftmals von bewegten Grenzschichten herrühren, können zur Grenzschichtfestlegung Verfahren aus dem technischen Gebiet der Echoverfolgung genutzt werden, die sog, "Tracking" Verfahren. Mit Trackingverfahren ist es möglich, ein Echo, welches von einer bestimmten Reflexionsstelle innerhalb eines Behälters stammt, über mehrere Messungen hinweg zu verfolgen. Weiterhin ist es möglich, das Verschwinden eines Echos zu detektieren, sei es aufgrund zu starker Dämpfung des Meßsignals oder aber auch aufgrund einer Überlagerung mit einem anderen Echo des Behälters. Das zuletzt real gemessene Echo der jeweiligen Reflexionsstelle, welches innerhalb der Auswertevorrichtung 701 gespeichert worden war, kann infolgedessen als Füllstandecho verarbeitet werden. Es wird jedoch als unsichtbares Echo mit einer geeigneten Markierung versehen,

Im Verfahrensschritt 805 wird anschließend überprüft, ob die in einer vorherigen Aufzeichnung identifizierte Reflexion oder die real gemessene Reflexionsstelle der Füllgutoberfläche 105 innerhalb der Echokurve 204 noch oder wieder sichtbar ist. Wird das Echo als sichtbares Echo erkannt, so wird dessen exakte Position durch Vermessung der Echokurve 204 mit einem Verfahren zur Bestimmung des direkten Echos ermittelt und ausgegeben. In anderen Worten mag das bedeuten, dass im Verfahrensschritt 805 überprüft wird, ob ein bereits identifiziertes und als Füllstandecho festgelegtes Echo in einer erneut bereitgestellten Echokurve immer noch identifiziert und als Füllstandecho festgelegt werden kann. Das Füllstandecho oder Grenzflächenecho mag das direkte Echo der betrachteten Grenzfläche sein, also das Mehrfachecho 0ter Ordnung. Ist diese Festlegung beispielsweise mittels des Trackingverfahrens möglich, so mag es sich um ein sichtbares Echo handeln und ein Verfahren zur unmittelbaren Echobestimmung kann eingesetzt werden. Dabei wird das bereits bestimmte direkte Echo oder das Füllstandecho vermessen. Wird in Schritt 805 die Sichtbarkeit des Füllstandechos bejaht, so wird im Schritt 806 das Füllstandecho vermessen.

Eine Auswertung mittels Mehrfachechos kann dann entfallen oder nur zur Überprüfung der Ergebnisse der direkten Echomessung genutzt werden. Die Auswertevorrichtung 701 mit der Echoauswerteeinrichtung 704, die nach dem Prinzip der Mehrfachechovermessung arbeitet, muss nicht aktiviert werden. Folglich kann im Schritt 817 das Verfahren beendet werden.

Ist das Echo 206 der Füllgutoberfläche 105 oder das direkte Echo hingegen nicht sichtbar, da es beispielsweise von einem anderen Echo überdeckt wird, so kann keine Vermessung desselbigen anhand der aktuellen Echokurve durchgeführt werden. D.h. eine unmittelbare Vermessung des Füllstandechos ist nicht möglich.

Es wird im Falle der Verneinung der Sichtbarkeit des Füllstandechos, beispielsweise von einer Entscheidungseinrichtung 705, festgestellt, ob Über die Vermessung eines Bodenechos oder mit Hilfe einer anderen indirekten oder mittelbaren Messung die Bestimmung der Position der Grenzfläche möglich ist. Für diese Entscheidung wird geprüft, ob mittels der Vermessung von Bodenechos oder der Vermessung von Mehrfachechos höherer als erster Ordnung oder von Mehrfachechos höherer Ordnung als nullter Ordnung, die Bestimmung der Position der Grenzfläche möglich ist.

Im Schritt 807 wird daher überprüft, ob das vom Behälterboden 108 verursachte Bodenecho 208 in der aktuellen Echokurve 204 sichtbar ist. Dazu kann noch eine weitere Echoauswerteeinrichtung 704" abgefragt werden. Wird die Sichtbarkeit des direkten Bodenechos bejaht, dann wird im Schritt 808 dessen Position $D_B$ bestimmt und im Wesentlichen exakt ermittelt. Zum exakten Ermitteln eines Echos mag im Wesentlichen ein Positionsbestimmungsverfahren eingesetzt werden, welches auch beim Vermessen des direkten Echos genutzt werden kann, da beim exakten Vermessen die Position eines Peaks oder Echos in einer Echokurve zu bestimmen ist, ohne auf den Typ des Echos Rücksicht nehmen zu müssen. Unter Verwendung des Zusammenhangs

$$d_L = \frac{d_B \cdot \sqrt{\varepsilon_M \cdot \mu_M} - D_B}{\sqrt{\varepsilon_M \cdot \mu_M} - \sqrt{\varepsilon_L \cdot \mu_L}} \qquad (6)$$

kann aus der elektrischen Distanz $D_B$ im Schritt 809 die im Wesentlichen exakte Distanz $d_L$ bis zur Füllgutoberfläche 105 mittelbar oder indirekt ermittelt werden. Es kann ohne die Mehrfachechos zu bestimmen im Schritt 817 das Verfahren beendet werden.

Ist das Echo des Behälterbodens 108 beispielsweise aufgrund zu starker Dämpfung des Signals innerhalb des Mediums 106 hingegen nicht sichtbar, so wird im Schritt 807 die Frage nach der Sichtbarkeit des Bodenechos verneint und im Schritt 810 untersucht, ob zumindest ein Mehrfachecho 206 der Medienoberfläche 105 oder der Füllgutoberfläche 105 in der aktuellen Echokurve 204 detektierbar oder sichtbar ist. Insbesondere wird untersucht, ob ein Mehrfachecho identifiziert werden kann, dessen Ordnung höher als 0 ist. Für diese Entscheidung kann beispielsweise ein entsprechender Qualitätsparameter von der Auswertevorrichtung 701 an die Entscheidungseinrichtung 705 eines Füllstandmessgeräts bereitgestellt werden, der die Sichtbarkeit des Mehrfachechos angibt.

Die Identifikation oder Klassifikation von Mehrfachechos kann anhand unterschiedlicher Verfahren vorgenommen werden. Beispielsweise können Mehrfachechos anhand von Vielfachen der Signallaufzeit identifiziert werden. Bei der Bestimmung von Mehrfachechos kann die Tatsache genutzt werden, dass Mehrfachechos eine k-fache Geschwindigkeit im Vergleich zu Füllgutechos aufweisen, wobei k eine beliebige natürliche Zahl ist. Es kann ein geeignetes Verfahren zur Erkennung der Mehrfachechos anhand deren Amplitude und Position in Bezug auf die identifizierte Füllgutreflexion vorgesehen sein.

Ferner kann das Verfahren vorsehen zumindest zwei Echos in der Echokurve zu identifiziert und die Positionen und/oder die Geschwindigkeitswerte der zumindest zwei Echos zu bestimmen. Danach kann die Durchführung einer Echoklassifikation der zwei Echos unter Berücksichtigung eines Vorzeichens eines Verhältnisses der ermittelten Geschwindigkeitswerte erfolgen, wobei die Echoklassifikation jedes der identifizierten Echos der Echokurve einer Merkmalsklasse ausgewählt aus einer Gruppe umfassend die Merkmalsklassen Bodenecho, Mehrfachecho, Antikorrelationsecho und Füllgutecho zugeordnet wird. Auf diese Weise kann eine robuste Erkennung von Mehrfachechos durchgeführt werden.

Führt die Auswertung der Echokurve 204, 210, 427, 514, 612 zu dem Ergebnis, dass ein Mehrfachecho 207 der Füllgutoberfläche 105 innerhalb der Echokurve 204, 210, 427, 514, 612 sichtbar ist und war eine Echobestimmung mit anderen Verfahren nicht möglich, so wird zu Schritt 811 übergegangen und die Position $D_{ML1}$ dieses Mehrfachechos nach Verfahren der Echovermessung im Wesentlichen exakt ermittelt. Zur Ermittlung der Mehrfachechos kann die erfindungsgemäße Auswertevorrichtung 701 aktiviert werden.

Im Schritt 812 wird in Abhängigkeit der Position $D_{ML1}$ des Mehrfachechos die im Wesentlichen exakte Distanz $d_L$ bis zur Füllgutoberfläche 105 gemäß nachfolgendem Zusammenhang indirekt ermittelt:

$$d_L = \frac{D_{ML1} + \sqrt{\varepsilon_L \cdot \mu_L} \cdot N \cdot d_D}{(1+N) \cdot \sqrt{\varepsilon_L \cdot \mu_L}} \qquad (7)$$

wobei N die Ordnung des vermessenen Mehrfachechos oder Vielfachechos angibt, und $d_D$ die Länge eines evtl. in der Anwendung vorhandenen Domschachtes 503, 613 spezifiziert. $d_L$ stellt die Kenngröße für die Lage der der Grenzfläche in dem Behälter dar. Diese Kenngröße wird ermittelt, indem die elektrische Distanz $D_{ML1}$, $D_{ML2}$ eines Mehrfachechos mit einem Produkt aus den Umgebungsparametern der Materialeigenschaft eines Überlagerungsmediums $\varepsilon_L$, $\mu_L$ und den Umgebungsparametern der Behältergeometrie $d_D$ und der Ordnung des Mehrfachechos verrechnet wird und durch ein Produkt aus den Umgebungsparametern der Materialeigenschaft und der Ordnung des Mehrfachechos dividiert wird.

Im vorliegenden Beispiel der Fig. 4 wird der Einfachheit halber auf die Darstellung eines Domschachtes verzichtet, die Länge $d_D$ des Domschachtes kann folglich zu 0 m gesetzt werden. Die Domschachtläuge kann automatisch oder selbstlernend ermittelt werden, beispielsweise mit Hilfe der Positionen oder Orte zweier Mehrfachechos.

Selbstlernen der Domschachtlänge aus der Position zweier Mehrfachechos ist unter Verwendung der Position eines erfassten und als solchen klassifizierten Mehrfachechos $E_{ML1}$ 207 der Füllgutreflexion, welches eine elektrische Distanz von $D_{ML1}$ aufweisen soll, sowie der Position eines erfassten und als solchen klassifizierten Mehrfachechos $E_{ML2}$ möglich, welches eine elektrische Distanz von $D_{ML2}$ aufweist. Beispielsweise kann die Eingabeeinrichtung 702 die Länge $d_D$ eines Domschachtes 503, 613 ermitteln, indem sie folgenden Zusammenhang auf die ermittelten Größen anwendet;

$$d_D = \frac{(N_1 + 1) \cdot D_{ML2} - (N_2 + 1) \cdot D_{ML1}}{\sqrt{\varepsilon_L \cdot \mu_L} \cdot (N_1 - N_2)}.$$

In diesem Zusammenhang definieren $N_1$ die Ordnung des Mehrfachechos an der Distanz $D_{ML1}$ und $N_2$ die Ordnung des Mehrfachechos an der Distanz $D_{ML2}$. Geht man davon aus, dass das Füllgutecho ein Mehrfachecho 0.

Ordnung mit einer elektrischen Distanz von $D_L$ ist, so kann die Eingabeeinrichtung 702 auch anhand der direkten Füllgutreflexion in Verbindung mit einer weiteren Mehrfachreflektion höherer Ordnung die Domschachtlänge ermitteln.

Weiterhin ist es möglich, die Lage der Füllgutoberfläche bei vorhandenem Domschacht 503, 613 ohne die Kenntnis der Domschachtlänge aus der Position $D_{ML1}$ eines ersten Mehrfachechos und aus der Position $D_{ML2}$ ($D_{ML2}$ ist die zu $E_{ML2}$ gehörige elektrische Distanz des Echos) eines zweiten Mehrfachechos gemäß folgender Gleichung zu ermitteln:

$$d_L = \frac{1}{\sqrt{\varepsilon_L \cdot \mu_L}} \cdot \left( \frac{N_2 \cdot D_{ML1} - N_1 \cdot D_{ML2}}{N_2 - N_1} \right) \quad (8)$$

wobei $N_1$ die Ordnung des Mehrfachechos oder Vielfachechos an der Position $D_{ML1}$ angibt und $N_2$ die Ordnung des Vielfachechos an der Position $D_{ML2}$ definiert. Zur Bestimmung der Kenngröße für die Lage der Grenzfläche in dem Behälter ist es folglich ausreichend, die elektrischen Positionen zweier Mehrfachechos zu bestimmen. Mindestens eins der beiden Mehrfachechos oder beide Mehrfachechos haben eine Ordnung größer 0. Die Verrechnung der Ordnung des einen Mehrfachechos mit der elektrischen Distanz des anderen Mehrfachechos und einer Differenz der Ordnungen der Mehrfachechos miteinander unter Berücksichtigung der Materialeigenschaften des Überlagerungsmediums führt schließlich auf die gesuchte Lage der zu bestimmenden Grenzfläche.

Führt die Auswertung der Echokurve 204, 210, 427, 514, 612 jedoch zu keinem sichtbaren Mehrfachecho 207 der Füllgutoberfläche 105, so wird die Abfrage nach der Sichtbarkeit eines Mehrfachechos der Grenzfläche und insbesondere des Füllgutes verneint und zu Schritt 813 übergegangen.

Im Schritt 813 wird untersucht, ob zumindest ein Mehrfachecho 209 des Behälterbodens 108 in der aktuellen Echokurve 204 vorhanden und sichtbar ist. Zur Bestimmung ob ein Mehrfachecho 209 sichtbar ist, das von einer Reflexion an einem Behälterboden 108 verursacht wird, kann beispielsweise wieder ein Vorzeichen eines Verhältnisses von ermittelten Geschwindigkeitswerten zweier Echos genutzt werden. Die Ordnung des Mehrfach-Bodenechos mag größer als 0 sein.

Wird im Schritt 813 ein Mehrfachecho des Behälterbodens 108 erkannt und wird somit die Frage nach der Sichtbarkeit eines Mehrfachechos des Behälterbodens bejaht, so wird im Schritt 814 die Distanz $D_{MB1}$ des Mehrfachechos 209 des Behälterbodens mit einem Echovermessungsverfahren im Wesentlichen exakt ermittelt Auf Basis der ermittelten Distanz $D_{MB1}$ des Mehrfachechos des

Behälterbodens kann indirekt auf die Distanz $d_L$ bis zur Füllgutoberfläche 105 gemäß

$$d_L = \frac{D_{MB1} - (1+N) \cdot \sqrt{\varepsilon_M \cdot \mu_M} \cdot d_B + N \cdot \sqrt{\varepsilon_L \cdot \mu_L} \cdot d_D}{(1+N) \cdot \left( \sqrt{\varepsilon_L \cdot \mu_L} - \sqrt{\varepsilon_M \cdot \mu_M} \right)} \quad (9)$$

geschlossen werden, wobei N die Ordnung des vermessenen Vielfachechos des Bodenechos, $d_D$ die Länge eines evtl. in der Anordnung oder Anwendung vorhandenen Domschachtes 503, 613 und $d_B$ die physikalische Höhe des Behälters 109 oder den Abstand der Bezugsebene 603 des Füllstandmessgerätes 401 vom Behälterboden 614 spezifiziert. Die Kenngröße $d_L$ für die Lage einer Grenzfläche in einem Behälter ergibt sich somit aus der Verrechnung der aus der Echokurve gemessenen elektrischen Distanz $D_{MB1}$ eines ermittelten Mehrfachechos, das mindestens von erster Ordnung ist mit einem Produkt aus Materialeigenschaften $\varepsilon_M$, $\mu_M$ des Mediums und der Geometrie $d_B$ des Behälters als Umgebungsparameter sowie einem Produkt aus Materialeigenschaften $\varepsilon_L$, $\mu_L$ des Mediums zwischen Füllgut und Füllstandmessgerät 401 und der Geometrie eines Deckelbereichs eines Behälters, insbesondere der Domschachtlänge $d_D$. Bei den beiden Produkten ist die Ordnung N des erkannten Mehrfachechos berücksichtigt.

Wie bereits ausgeführt wird im vorliegenden Beispiel der Fig. 4 der Einfachheit halber auf die Darstellung eines Domschachtes 503 oder einer Hallendecke 602 verzichtet und die Länge $d_D$ des Domschachtes kann folglich zu 0 m gesetzt werden. Neben der manuellen Eingabe des Umgebungsparameters Domschachtlänge $d_D$ ist eine automatische Bestimmung der Domschachtlänge möglich.

Weiterhin ist es möglich, die Lage $d_L$ der Füllgutoberfläche unabhängig von einem gegebenenfalls vorhandenen Domschacht 503, 613 ohne die Kenntnis einer Domschachtlänge aus der Position $D_{MB1}$ eines ersten Mehrfachechos der

Bodenreflektion und aus der Position $D_{MB2}$ (nicht gezeigt in Fig. 4) eines zweiten Mehrfachechos der Bodenreflektion gemäß folgender Gleichung zu ermitteln:

$$d_L = \frac{1}{\sqrt{\varepsilon_L \cdot \mu_L} - \sqrt{\varepsilon_M \cdot \mu_M}} \cdot \left( \frac{N_2 \cdot D_{MB1} - N_1 \cdot D_{MB2}}{N_2 - N_1} - d_B \right) (10)$$

wobei $N_1$ die Ordnung eines ersten Mehrfachechos oder Vielfachechos an der Position $D_{MB1}$ angibt und $N_2$ die Ordnung eines zweiten Vielfachechos an der Position $D_{MB2}$ definiert. $N_1$ und $N_2$ sind unterschiedlich. In einem Beispiel ist mindestens eine der Ordnungen größer als 0. Die Kenngröße wird ermittelt, indem die elektrische Distanzwerte eines Mehrfachechos mit der Ordnung des anderen Mehrfachechos verrechnet wird und durch die Differenz der unterschiedlichen Ordnungen dividiert wird. Die ermittelte Wert wird mit der Behälterhöhe $d_B$ und den Umgebungsparametern des Materials $\varepsilon_M$, $\mu_M$ und der Überlagerungsatmosphäre $\varepsilon_L$, $\mu_L$ verrechnet.

Führt die Auswertung der Echokurve 204, 210, 427, 514, 612 im Schritt 813 jedoch zu keinem sichtbaren Mehrfachecho 209 des Behälterbodens 108, so wird zu Schritt 816 übergegangen. Wird also die Frage nach der Sichtbarkeit eines Bodenechos im Schritt 813 verneint, wird im Schritt 816 von der Auswertevorrichtung 111, 701 ein Echoverlust festgestellt, welcher nach außen hin signalisiert werden kann, beispielsweise durch Ausgabe eines Störstroms durch die Ausgabeeinrichtung 112, 113.

Der Durchlauf einer Messung endet im Endzustand 817.

Das vorgeschlagene Verfahren kann die Möglichkeit bieten, die Position der Füllgutoberfläche mittelbar, d.h. indirekt zu ermitteln, indem zuvor zumindest ein Mehrfachecho mit einer Ordnung größer 0 ermittelt wird, um aus der im Wesentlichen exakten Position oder der im Wesentlichen exakt vermessenen Position des Mehrfachechos gemäß den Zusammenhängen in den Formeln (7), (8), (9) und (10) auf die Position der Füllgutobertläche 105 oder der interessierenden Grenzfläche zu schließen. Das Verfahren kann sich insbesondere zu einer genauen Messung bei sehr vollen Behältern eignen, wie in Fig. 3 dargestellt. Das Verfahren kann aber auch dann gute Messwerte liefern, wenn das Füllstandecho 206 im Einflussbereich einer Reflexion eines fest im Behälter eingebauten Störers liegt, die sich als Störecho in der Echokurve bemerkbar macht. Da durch die Überlagerung der beiden Echos die Vermessung nur ungenau stattfinden kann, kann in solchen Situationen auf die Vermessung eines Vielfachechos ausgewichen werden. Die Entscheidungseinrichtung 705 kann für die aktuell zu vermessende Situation die angebrachte Auswertevorrichtung und/oder das von der Auswertevorrichtung genutzte Verfahren festlegen. Insbesondere die flexible Auswahl des Messprinzips durch die Auswahl der Auswertevorrichtung kann den Einsatz eines auf die jeweilige Echosituation angepassten Messprinzips ermöglichen. In Kombination mit einer Anzeigeeinrichtung für die Qualität kann eine robuste Messung eines Füllstandes ermöglicht werden.

Weiterhin kann das Verfahren gut bei der Messung von Medien mit niedrigen DK~ Werten oder Permittivitätszahlen oder Permittivitätswerten eingesetzt werden. Verfahren, die sich ausschließlich auf die Vermessung des direkten Füllstand- und/oder Bodenechos 208 und nicht auf die Vermessung des Mehrfachechos stützen, können bei einer sehr geringen Befüllung des Behälters 108 zu starken Ungenauigkeiten führen, da sich das Füllstandecho 206 und das Bodenecho 208 genau dann gegenseitig überlagern. Eine Vermessung eines Vielfachechos 209 der Bodenreflexion kann die Messgenauigkeit in einem solchen Fall erhöhen. Mit der Entscheidungseinrichtung 705 kann für die gerade vorliegende Messsituation das angebrachte Messverfahren gewählt werden, beispielsweise indem sie einen entsprechenden Programmcode in die Auswertevorrichtung 701 lädt oder indem sie zwischen unterschiedlichen Auswertevorrichtungen 701 und somit zwischen unterschiedlichen Echoauswerteeinrichtungen 704, 704', 704" auswählt. Die Entscheidungseinrichtung 705 kann anhand der Sichtbarkeit bestimmter Echotypen das jeweils angebrachte Verfahren ermitteln und die entsprechende Auswertevorrichtung auswählen oder eine Auswertevorrichtung so steuern, das sie das angebrachte Verfahren ausführt.

Es sei weiterhin erwähnt, dass die in diesem Text beschriebenen Prinzipien für die Füllstandmessung oder Grenzstandmessung nach dem FMCW-Prinzip ebenso geeignet ist wie bei der Füllstandmessung nach dem Prinzip der geführten Mikrowelle, der Impuls-Laufzeitmessung, dem Ultraschallprinzip, dem Laserprinzip oder einem anderen Laufzeitverfahren,

Die angestellten Überlegungen lassen sich auf Anwendungsfälle übertragen, in denen die Trennschicht zwischen zwei unterschiedlichen Medien in einem Behälter bestimmt werden soll. So lässt sich insbesondere die Lage einer Trennschicht, welche die obere Grenzfläche eines unten im Behälter befindlichen Mediums bildet, mittelbar bestimmen, indem die Position eines Vielfachechos dieser Trennschicht ermittelt wird, um daraus die Position der Trennschicht in einem Behälter zu errechnen.

Die Umgebungsparameter wie die Behälterhöhe oder die Pennittivitätswerte $\varepsilon_M$; $\varepsilon_L$ oder Permeabilitätswerte $\mu_M$, $\mu_L$ der einzelnen Medien sowie der Überlagerungsatmosphäre können manuell im Rahmen der Inbetriebnahme oder im Rahmen einer Werkskalibrierung des Sensors 425 vorgegeben werden. Teile oder alle benötigte Umgebungsparameter können aber auch vom Füllstandmessgerät automatisch ermittelt werden, insbesondere von einer Parameterbestimmungseinrichtung.

Die Domschachtlänge sowie der Behälterhöhe können manuell vorgegeben werden oder auch automatisch bestimmt werden. Insbesondere bei der automatischen Bestimmung können sich die Behälterhöhe und/oder die Domschachtläge innerhalb der Signalverarbeitung des Sensors geringfügig von den physikalisch nachmessbaren Größen wegen Meßtoleranzen unterscheiden. Beispielsweise kann der Nullpunkt des Sensors 425 durch Parametrierung verändert werden, beispielsweise durch die Einführung eines Offsets, um auf eine kundenspezifische Bezugsebene zu wechseln. Weiterhin kann beispielsweise die Höhe eines Behälters in einer Anwendung inklusive eines darauf montierten Domschachtes definiert sein, in anderen Anwendungen, wie im Fall einer negativen Domschachtlänge, mag diese Definition so jedoch nicht verwendet werden. Im Rahmen des vorliegenden Textes sollen daher mit den betreffenden Größen Zahlenwerte definiert sein, die in einer Beziehung zu den physikalischen Größen stehen, und anhand derer spezielle Verfahren, insbesondere eine mittelbare Messung der Füllgutlage, realisiert werden können. Mit anderen Worten mögen mit den Zahlenwerten Größen gemeint sein, mit Hilfe derer die Anwendung der Gleichungen (7), (8), (9), (10) im gegebenen Anwendungsfall zu korrekten Ergebnissen führt.

Die Fig. 9 zeigt Verfahrensschritte, die beim Ausführen eines Verfahrens zum Bestimmen der Kenngröße für die Lage einer Genzfläche beispielsweise in einer Auswertevorrichtung 701 ausgeführt wird. Das Verfahren beginnt ausgehend von dem Ruhezustand 901mit dem Empfangen einer Echokurve.

In Schritt 902 wird die Echokurve mit den Peaks, die Echos repräsentieren, empfangen und im Schritt 903 werden Umgebungsparameter bereitgestellt. Die Umgebungsparameter können bereits bei einer Inbetriebnahme der Auswertevorrichtung eingegeben worden sein.

Nach dem Empfang der Echokurve erfolgt im Schritt 904 das Erkennen eines Mehrfachechos, wobei sichergestellt wird, dass nur Mehrfachechos einer Ordnung größer als 0 berücksichtigt werden. Mittels einem Verfahren, das die Ordnung des Mehrfachechos und die Umgebungsparameter berücksichtigt, beispielsweise mit einer Rechenmethode nach Gleichung (7), (8), (9) oder (10), wird im Schritt 905 die gesuchte Kenngröße ermittelt und im Schritt 906 bereitgestellt, bevor das Verfahren im Schritt 907 endet. Zur Bestimmung mit welchem Auswerteverfahren die Echokurve vermessen werden soll, kann die Auswertevorrichtung 701 ein Signal erhalten.

Es werden folglich erkannte Mehrfachechos zur Trennschichtmessung, Füllstandmessung oder Grenzstandmessung genutzt.

Ergänzend ist darauf hinzuweisen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

**Patentansprüche**

1. Auswertevorrichtung (701) für ein Füllstandmessgerät (401) zur Bestimmung einer Kenngröße ($d_L$) für die Lage einer Grenzfläche (105, 108) in einem Behälter (109, 501, 601), aufweisend:

   eine Echokurvenauswerteeinrichtung (704) zum Empfangen und Auswerten einer Echokurve (204, 427, 514, 612);
   eine Ausgabeeinrichtung (112, 113) zum Bereitstellen der Kenngröße ($d_L$) für die Lage der Grenzfläche (105, 108);
   wobei die Ausgabeeinrichtung (112, 113) mit der Echokurvenauswerteeinrichtung (704) verbunden ist;
   wobei die Echokurvenauswerteeinrichtung (704) zum Erkennen eines Mehrfachechos (207, 209, 405, 611) in der Echokurve (204, 427), zum Bestimmen der Position ($D_{ML1}$, $D_{ML2}$, $D_{MB1}$) des Mehrfachechos und zum Bestimmen der Ordnung ($N$, $N_1$, $N_2$) des Mehrfachechos eingerichtet ist;
   wobei das Mehrfachecho (207, 209, 405, 611) zumindest die Ordnung ($N$, $N_1$, $N_2$) eins aufweist; und
   wobei die Echokurvenauswerteeinrichtung (704) eingerichtet ist, aus der Position ($D_{ML1}$, $D_{ML2}$, $D_{MB1}$) des Mehrfachechos, aus den Umgebungsparametern der Materialeigenschaft eines Überlagerungsmediums ($\varepsilon_L$, $\mu_L$) und aus der Ordnung ($N$, $N_1$, $N_2$) des Mehrfachechos die Kenngröße ($d_L$) für die Lage der Grenzfläche in dem Behälter gemäß dem Zusammenhang

$$d_L = \frac{D_{ML1} + \sqrt{\varepsilon_L \cdot \mu_L} \cdot N \cdot d_D}{(1 + N) \cdot \sqrt{\varepsilon_L \cdot \mu_L}}$$

   zu bestimmen und die Kenngröße ($d_L$) über die Ausgabeeinrichtung (112, 113) bereitzustellen, wobei $\varepsilon_L$ die

relative Permittivität einer Überlagerungsatmosphäre spezifiziert, wobei $\mu_L$ die relative Permeabilität einer Überlagerungsatmosphäre spezifiziert, wobei $d_D$ die Länge eines optional vorhandenen Domschachtes (503, 613) spezifiziert.

2.  Auswertevorrichtung (701) nach Anspruch 1, wobei die Echokurvenauswerteeinrichtung (704) zum Bestimmen eines weiteren Mehrfachechos (405) und dessen Position sowie dessen Ordnung ($N_2$) aus der Echokurve (204, 427, 514, 612) eingerichtet ist; und
    wobei die Echokurvenauswerteeinrichtung (704) eingerichtet ist durch das Verknüpfen der Position ($D_{ML2}$) des weiteren Mehrfachechos (405) und der Ordnung ($N_2$) des weiteren Mehrfachechos mit der Position ($D_{ML2}$) des Mehrfachechos (207, 209, 405, 611) und der Ordnung des Mehrfachechos die Kenngröße ($d_L$) für die Lage der Grenzfläche in dem Behälter zu bestimmen und über die Ausgabeeinrichtung bereitzustellen

3.  Auswertevorrichtung (701) nach Anspruch 1 oder 2, wobei an der Entstehung des zumindest einen Mehrfachechos (207, 209, 405, 611) zumindest eine Fläche beteiligt ist, ausgewählt aus der Gruppe von Flächen bestehend aus [i] der Grenzfläche (105), [ii] einer weiteren Grenzfläche, [iii] einer Grenzfläche zwischen zwei unterschiedlichen Füllgütern und [iv] einer Bodenfläche (108).

4.  Auswertevorrichtung (701) nach einem der Ansprüche 1 bis 3, wobei die Echokurvenauswerteeinrichtung (704) zumindest einen weiteren Umgebungsparameter berücksichtigt;
    wobei der Umgebungsparameter zumindest ein Umgebungsparameter ist, ausgewählt aus der Gruppe der Umgebungsparameter bestehend aus [i] der relativen Permittivität eines Füllgutes ($\varepsilon_M$), [ii] der relativen Permeabilität eines Füllgutes ($\mu_M$), [iii] der relativen Permittivität eines weiteren Füllgutes, [iv] der relativen Permeabilität eines weiteren Füllgutes.

5.  Auswertevorrichtung (701) nach einem der Ansprüche 1 bis 4, ferner aufweisend:
    eine Parameterbestimmungseinrichtung (702) zum Bestimmen zumindest eines Umgebungsparameters.

6.  Auswertevorrichtung (701) nach einem der Ansprüche 1 bis 5, ferner aufweisend:
    eine Trackingeinrichtung (706) zum Verfolgen eines Echos über mehrere Messzyklen hinweg.

7.  Auswertevorrichtung (701) nach einem der Ansprüche 1 bis 6, die Ausgabeeinrichtung ferner aufweisend:

    zumindest eine Schnittstelle (112, 113) zum Bereitstellen eines Signals;
    wobei das Signal zum Anzeigen eines Echoverlustes und/oder des Typs des erkannten Mehrfachechos eingerichtet ist.

8.  Füllstandmessgerät (401), das nach dem Prinzip der Laufzeitmessung eine Echokurve (204, 427, 514, 612) erfasst, aufweisend:

    eine Auswertevorrichtung (701) nach einem der Ansprüche 1 bis 7,
    wobei das Füllstandmessgerät (401) eingerichtet ist, die erfasste Echokurve (204, 427, 514, 612) an die Auswertevorrichtung (701) zu übertragen, um die Kenngröße ($d_L$) für die Lage der Grenzfläche zu erhalten; und
    wobei das Füllstandmessgerät (401) ferner eingerichtet ist, aus der von der Auswertevorrichtung (704) erhaltenen Kenngröße ($d_L$) für die Lage der Grenzfläche (105, 108) einen Füllstand zu ermitteln.

9.  Füllstandmessgerät (401) nach Anspruch 8, ferner aufweisend:

    zumindest eine weitere Auswertevorrichtung (704', 704") zur Bestimmung einer weiteren Kenngröße für die Lage der Grenzfläche des Füllstands;
    eine Entscheidungseinrichtung (705);
    wobei die Auswertevorrichtung (704) und jede der zumindest einen weiteren Auswertevorrichtung (704', 704") ein unterschiedliches Prinzip nutzt, um die Kenngröße für die Lage der Grenzfläche zu ermitteln;
    wobei die Entscheidungseinrichtung (705) mit der Auswertevorrichtung (704) und mit jeder der zumindest einen weiteren Auswertevorrichtung (704', 704") verbunden ist;
    wobei die Entscheidungseinrichtung (705) eingerichtet ist, von den Auswertevorrichtungen (704) die ermittelten Kenngrößen für die Lage der Grenzfläche zu erhalten; und
    wobei die Entscheidungseinrichtung (705) eingerichtet ist, zumindest eine der Auswertevorrichtungen (704, 704', 704") auszuwählen und aus der von der ausgewählten Auswertevorrichtung bereitgestellten Kenngröße den Füllstand zu ermitteln.

10. Füllstandmessgerät (401) nach Anspruch 8 oder 9, wobei die Entscheidungseinrichtung (705) eingerichtet ist die Qualität für die Ermittlung des Füllstandes anzugeben.

11. Verfahren zum Bestimmen einer Kenngröße ($d_L$) für die Lage einer Grenzfläche in einem Behälter, aufweisend:

Empfangen einer Echokurve (204, 427, 514, 612);
Erkennen eines Mehrfachechos (207, 209, 405, 611) in der Echokurve,
Bestimmen der Position ($D_{ML1}$, $D_{ML2}$, $D_{MB1}$) des Mehrfachechos; und
Bestimmen der Ordnung ($N$, $N_1$, $N_2$) des Mehrfachechos;
wobei das Mehrfacheccho zumindest die Ordnung eins aufweist; und
Bestimmen der Kenngröße ($d_L$) für die Lage der Grenzfläche in dem Behälter, aus der Position ($D_{ML1}$, $D_{ML2}$, $D_{MB1}$) des Mehrfachechos, aus den Umgebungsparametern der Materialeigenschaft eines Überlagerungsmediums ($\varepsilon_L$, $\mu_L$) und aus der Ordnung ($N$, $N_1$, $N_2$) des Mehrfachechos gemäß dem Zusammenhang

$$d_L = \frac{D_{ML1} + \sqrt{\varepsilon_L \cdot \mu_L} \cdot N \cdot d_D}{(1+N) \cdot \sqrt{\varepsilon_L \cdot \mu_L}},$$

wobei $\varepsilon_L$ die relative Permittivität einer Überlagerungsatmosphäre spezifiziert, wobei $\mu_L$ die relative Permeabilität einer Überlagerungsatmosphäre spezifiziert, wobei $d_D$ die Länge eines optional vorhandenen Domschachtes (503, 613) spezifiziert; und
Bereitstellen der Kenngröße für die Lage der Grenzfläche.

12. Verfahren zur Füllstandmessung, aufweisend:

Erfassen einer Echokurve durch das Durchführen einer Laufzeitmessung;
Bestimmen einer Kenngröße für die Lage einer Grenzfläche in einem Behälter, durch das Auswerten der erfassten Echokurve mit dem Verfahren zum Bestimmen einer Kenngröße für die Lage einer Grenzfläche nach Anspruch 11;
Ermitteln eines Füllstandes aus der Kenngröße für die Lage einer Grenzfläche.

13. Verfahren zur Füllstandmessung nach Anspruch 12, ferner aufweisend:

Bereitstellen von zumindest einem weiteren Verfahren zum Bestimmen einer Kenngröße für die Lage einer Grenzfläche in einem Behälter;
wobei die unterschiedlichen Verfahren unterschiedliche Prinzipien zum Bestimmen der Kenngröße für die Lage der Grenzfläche nutzen;
Auswählen eines Verfahrens;
Ermitteln des Füllstandes aus der Kenngröße für die Lage der Grenzfläche mit dem ausgewählten Verfahren.

14. Computerlesbares Speichermedium auf dem ein Programm gespeichert ist, das, wenn es auf einem Prozessor einer Auswertevorrichtung nach einem der Ansprüche 1 bis 7 oder eines Füllstandmessgeräts nach einem der Ansprüche 8 bis 10 ausgeführt wird, das Verfahren nach einem der Ansprüche 11 bis 13 durchführt.

15. Programmelement, das, wenn es auf einem Prozessor einer Auswertevorrichtung nach einem der Ansprüche 1 bis 7 oder eines Füllstandmessgeräts nach einem der Ansprüche 8 bis 10 ausgeführt wird, das Verfahren nach einem der Ansprüche 11 bis 13 durchführt.

**Claims**

1. Evaluation apparatus (701) for a level meter (401) for determining a characteristic variable ($d_L$) for the location of a boundary surface (105, 108) in a container (109, 501, 601), having:

an echo curve evaluation device (704) for receiving and evaluating an echo curve (204, 427, 514, 612);
an output device (112, 113) for providing the characteristic variable ($d_L$) for the location of the boundary surface (105, 108);

wherein the output device (112, 113) is connected to the echo curve evaluation device (704);

wherein the echo curve evaluation device (704) is configured to recognize a multiple echo (207, 209, 405, 611) in the echo curve (204, 427), to determine the position ($D_{ML1}$, $D_{ML2}$, $D_{MB1}$) of the multiple echo, and to determine the order (N, $N_1$, $N_2$) of the multiple echo;

wherein the multiple echo (207, 209, 405, 611) has at least the order (N, $N_1$, $N_2$) of one; and

wherein the echo curve evaluation device (704) is configured to determine the characteristic variable ($d_L$) for the location of the boundary surface in the container based on the the position ($D_{ML1}$, $D_{ML2}$, $D_{MB1}$) of the multiple echo, the environmental parameters of the material characteristic of an overlay medium ($\varepsilon_L$, $\mu_L$), and the order (N, $N_1$, $N_2$) of the multiple according to the relation

$$d_L = \frac{D_{ML1} + \sqrt{\varepsilon_L \cdot \mu_L} \cdot N \cdot d_D}{(1 + N) \cdot \sqrt{\varepsilon_L \cdot \mu_L}}$$

and to provide the characteristic variable ($d_L$) via the output device (112, 113), wherein $\varepsilon_L$ specifies the relative permittivity of an overlying atmosphere, wherein $\mu_L$ specifies the relative permeability of an overlying atmosphere ($\mu_L$), wherein $d_D$ is the length of an optionally present dome shaft.

2. Evaluation apparatus (701) according to claim 1, wherein the echo curve evaluation device (704) is configured to determine a further multiple echo (405), and its position as well as its order ($N_2$) based on the echo curve (204, 427, 514, 612); and

wherein the echo curve evaluation device (704) is configured to determine the characteristic variable ($d_L$) for the location of the boundary surface in the container by linking the position ($D_{ML2}$) of the further multiple echo (405) and the order ($N_2$) of the further multiple echo with the position ($D_{ML2}$) of the multiple echo (207, 209, 405, 611) and the order of the multiple echo, and to provide the characteristic variable via the output device.

3. Evaluation apparatus (701) according to claim 1 or 2, wherein at least one surface selected from the group of surfaces composed of [i] the boundary surface (105), [ii] a further boundary surface, [iii] a boundary surface between two different filling materials, and [iv] a bottom surface (108) are involved in the creation of the at least one multiple echo (207, 209, 405, 611).

4. Evaluation apparatus (701) according to one of claims 1 through 3, wherein the echo curve evaluation device (704) takes at least one further environmental parameter into account;

wherein the environmental parameter is least one environmental parameter selected from the group of environmental parameters composed of [i] the relative permittivity of a filling material ($\varepsilon_M$), [ii] the relative permeability of a filling material ($\mu_M$), [iii] the relative permittivity of a further filling material, [iv] the relative permeability of a further filling material.

5. Evaluation apparatus (701) according to one of claims 1 through 4, also having:
a parameter determination device (702) for determining at least one environmental parameter.

6. Evaluation apparatus (701) according to one of claims 1 through 5, also having:
a tracking device (706) for tracking an echo over multiple measuring cycles.

7. Evaluation apparatus (701) according to one of claims 1 through 6, the output unit also having:

at least one interface (112, 113) for providing a signal;
wherein the signal is configured to display an echo loss and/or the type of the recognized multiple echo.

8. Level meter (401) which detects an echo curve (204, 427, 514, 612) according to the principle of transit time measurement, having:

an evaluation apparatus (701) according to one of claims 1 through 7,
wherein the level meter (401) is configured to transmit the detected echo curve (204, 427, 514, 612) to the evaluation apparatus (701) to obtain the characteristic variable ($d_L$) for the location of the boundary surface; and
wherein the level meter (401) is further configured to determine a filling level based on the characteristic variable

($d_L$) for the location of the boundary surface (105, 108) which is obtained from the evaluation apparatus (704).

9. Level meter (401) according to claim 8, also having:

at least one additional evaluation apparatus (704', 704") for determining a further characteristic variable for the location of the boundary surface of the filling level;
a decision device (705);
wherein the evaluation apparatus (704) and each of the at least one additional evaluation apparatus (704', 704") uses a different principle to determine the characteristic variable for the location of the boundary surface;
wherein the decision device (705) is connected to the evaluation apparatus (704) and to each of the at least one additional evaluation apparatus (704', 704");
wherein the decision device (705) is configured to obtain from the evaluation apparatuses (704) the determined characteristic variables for the location of the boundary surface; and
wherein the decision device (705) is configured to select at least one of the evaluation apparatuses (704, 704', 704"), and to determine the filling level based on the characteristic variable provided by the selected evaluation apparatus.

10. Level meter (401) according to claim 8 or 9, wherein the decision device (705) is configured to indicate the quality for determining the filling level.

11. Method for determining a characteristic variable for the location of a boundary surface in a container, comprising:

receiving an echo curve;
recognizing a multiple echo in the echo curve,
determining the position of the multiple echo; and
determining the order of the multiple echo;
wherein the multiple echo has at least the order of one; and
determining the characteristic variable for the location of the boundary surface in the container based on the the position ($D_{ML1}$, $D_{ML2}$, $D_{MB1}$) of the multiple echo, the environmental parameters of the material characteristic of an overlay medium ($\varepsilon_L$, $\mu_L$), and the order (N, $N_1$, $N_2$) of the multiple according to the relation

$$d_L = \frac{D_{ML1} + \sqrt{\varepsilon_L \cdot \mu_L} \cdot N \cdot d_D}{(1 + N) \cdot \sqrt{\varepsilon_L \cdot \mu_L}} ,$$

wherein $\varepsilon_L$ specifies the relative permittivity of an overlying atmosphere, wherein $\mu_L$ specifies the relative permeability of an overlying atmosphere ($\mu_L$), wherein $d_D$ is the length of an optionally present dome shaft; and
providing the characteristic variable for the location of the boundary surface.

12. Method for level measurement, comprising:

detecting an echo curve by carrying out a transit time measurement;
determining a characteristic variable for the location of a boundary surface in a container by evaluating the detected echo curve, using the method for determining a characteristic variable for the location of a boundary surface according to claim 11;
ascertaining a filling level based on the characteristic variable for the location of a boundary surface.

13. Method for level measurement according to claim 12, further comprising:

providing at least one further method for determining a characteristic variable for the location of a boundary surface in a container;
wherein the various methods use different principles for determining the characteristic variable for the location of the boundary surface;
selecting a method;
ascertaining the filling level based on the characteristic variable for the location of the boundary surface, using the selected method.

14. Computer-readable medium on which a program is stored which, when executed by a processor of an evaluation apparatus according to any one of claims 1 to 7 or or of a level meter according to any one of claims 8 to 10 carries out the method according to one of claims 11 through 13.

15. Program element, which, when executed by a processor of an evaluation apparatus according to any one of claims 1 to 7 or or of a level meter according to any one of claims 8 to 10, carries out the method according to one of claims 11 through 13.

**Revendications**

1. Dispositif d'évaluation (701) pour un appareil de mesure de niveau de remplissage (401) pour déterminer une grandeur caractéristique ($d_L$) de la position d'une surface limite (105, 108) dans un récipient (109, 501, 601), présentant :

un moyen d'évaluation de courbe d'écho (704) pour recevoir et évaluer une courbe d'écho (204, 427, 514, 612) ;
un moyen de sortie (112, 113) pour fournir la grandeur caractéristique ($d_L$) de la position de la surface limite (105, 108) ;
dans lequel le moyen de sortie (112, 113) est relié au moyen d'évaluation de courbe d'écho (704) ;
dans lequel le moyen d'évaluation de courbe d'écho (704) est adapté pour détecter un écho multiple (207, 209, 405, 611) dans la courbe d'écho (204, 427), pour déterminer la position ($D_{ML1}$, $D_{ML2}$, $D_{MB1}$) de l'écho multiple et pour déterminer l'ordre (N, $N_1$, $N_2$) de l'écho multiple ;
dans lequel l'écho multiple (207, 209, 405, 611) présente au moins un ordre (N, $N_1$, $N_2$) égal à un ; et
dans lequel le moyen d'évaluation de courbe d'écho (704) est adapté pour déterminer, à partir de la position ($D_{ML1}$, $D_{ML2}$, $D_{MB1}$) de l'écho multiple, à partir des paramètres d'environnement de la propriété de matériau d'un milieu de superposition ($\varepsilon_L$, $\mu_L$) et à partir de l'ordre (N, $N_1$, $N_2$) de l'écho multiple, la grandeur caractéristique ($d_L$) de la position de la surface limite dans le récipient selon la relation

$$d_L = \frac{D_{ML1} + \sqrt{\varepsilon_L \cdot \mu_L} \cdot N \cdot d_D}{(1 + N) \cdot \sqrt{\varepsilon_L \cdot \mu_L}}$$

et pour fournir la grandeur caractéristique ($d_L$) par l'intermédiaire du moyen de sortie (112, 113), où $\varepsilon_L$ spécifie la permittivité relative d'une atmosphère de superposition, $\mu_L$ spécifie la perméabilité relative d'une atmosphère de superposition, $d_D$ spécifie la longueur d'un trou d'homme éventuellement présent (503, 613).

2. Dispositif d'évaluation (701) selon la revendication 1, dans lequel le moyen d'évaluation de courbe d'écho (704) est adapté pour déterminer un autre écho multiple (405) et sa position ainsi que son ordre ($N_2$) à partir de la courbe d'écho (204, 427, 514, 612) ; et
dans lequel le moyen d'évaluation de courbe d'écho (704) est adapté pour déterminer la grandeur caractéristique ($d_L$) de la position de la surface limite dans le récipient en combinant la position ($D_{ML2}$) de l'autre écho multiple (405) et l'ordre ($N_2$) de l'autre écho multiple avec la position ($D_{ML2}$) de l'écho multiple (207, 209, 405, 611) et l'ordre de l'écho multiple et pour la fournir par l'intermédiaire du moyen de sortie.

3. Dispositif d'évaluation (701) selon la revendication 1 ou 2, dans lequel au moins une surface choisie dans le groupe de surfaces constitué par [i] la surface limite (105), [ii] une autre surface limite, [iii] une surface limite entre deux produits de remplissage différents et [iv] une surface de fond (108) participe à la formation dudit au moins un écho multiple (207, 209, 405, 611).

4. Dispositif d'évaluation (701) selon l'une des revendications 1 à 3, dans lequel le moyen d'évaluation de courbe d'écho (704) tient compte d'au moins un autre paramètre d'environnement ;
dans lequel le paramètre d'environnement est au moins un paramètre d'environnement choisi dans le groupe des paramètres d'environnement constitué par [i] la permittivité relative d'un produit de remplissage ($\varepsilon_M$), [ii] la perméabilité relative d'un produit de remplissage ($\mu_M$), [iii] la permittivité relative d'un autre produit de remplissage, [iv] la perméabilité relative d'un autre produit de remplissage.

5. Dispositif d'évaluation (701) selon l'une des revendications 1 à 4, présentant en outre :

un moyen de détermination de paramètres (702) pour déterminer au moins un paramètre d'environnement.

6. Dispositif d'évaluation (701) selon l'une des revendications 1 à 5, présentant en outre :
un moyen de suivi (706) pour suivre un écho sur plusieurs cycles de mesure.

7. Dispositif d'évaluation (701) selon l'une des revendications 1 à 6, le moyen de sortie présentant en outre :

    au moins une interface (112, 113) pour fournir un signal ;
    dans lequel le signal est adapté pour indiquer une perte d'écho et/ou le type de l'écho multiple détecté.

8. Appareil de mesure de niveau de remplissage (401), qui détecte une courbe d'écho (204, 427, 514, 612) selon le principe de la mesure du temps de propagation, présentant :

    un dispositif d'évaluation (701) selon l'une des revendications 1 à 7,
    dans lequel l'appareil de mesure de niveau de remplissage (401) est adapté pour transmettre la courbe d'écho détectée (204, 427, 514, 612) au dispositif d'évaluation (701) afin d'obtenir la grandeur caractéristique ($d_L$) de la position de la surface limite ; et
    dans lequel l'appareil de mesure de niveau de remplissage (401) est en outre adapté pour déterminer un niveau de remplissage à partir de la grandeur caractéristique ($d_L$) de la position de la surface limite (105, 108) obtenue du dispositif d'évaluation (704).

9. Appareil de mesure de niveau de remplissage (401) selon la revendication 8, présentant en outre :

    au moins un autre dispositif d'évaluation (704', 704") pour déterminer une autre grandeur caractéristique de la position de la surface limite du niveau de remplissage ;
    un moyen de décision (705) ;
    dans lequel le dispositif d'évaluation (704) et chacun desdits au moins un autre dispositif d'évaluation (704', 704") utilise un principe différent pour déterminer la grandeur caractéristique de la position de la surface limite ;
    dans lequel le moyen de décision (705) est relié au dispositif d'évaluation (704) et à chacun desdits au moins un autre dispositif d'évaluation (704', 704") ;
    dans lequel le moyen de décision (705) est adapté pour obtenir des dispositifs d'évaluation (704) les grandeurs caractéristiques déterminées de la position de la surface limite ; et
    dans lequel le moyen de décision (705) est adapté pour sélectionner au moins un des dispositifs d'évaluation (704, 704', 704") et pour déterminer le niveau de remplissage à partir de la grandeur caractéristique fournie par le dispositif d'évaluation sélectionné.

10. Appareil de mesure de niveau de remplissage (401) selon la revendication 8 ou 9, dans lequel le moyen de décision (705) est adapté pour indiquer la qualité de la détermination du niveau de remplissage.

11. Procédé pour déterminer une grandeur caractéristique ($d_L$) de la position d'une surface limite dans un récipient, présentant les étapes consistant à :

    recevoir une courbe d'écho (204, 427, 514, 612) ;
    détecter un écho multiple (207, 209, 405, 611) dans la courbe d'écho,
    déterminer la position ($D_{ML1}$, $D_{ML2}$, $D_{MB1}$) de l'écho multiple ; et
    déterminer l'ordre ($N$, $N_1$, $N_2$) de l'écho multiple ;
    dans lequel l'écho multiple présente au moins l'ordre un ; et
    déterminer la grandeur caractéristique ($d_L$) de la position de la surface limite dans le récipient à partir de la position ($D_{ML1}$, $D_{ML2}$, $D_{MB1}$) de l'écho multiple, à partir des paramètres d'environnement de la propriété de matériau d'un milieu de superposition ($\varepsilon_L, \mu_L$) et à partir de l'ordre ($N$, $N_1$, $N_2$) de l'écho multiple selon la relation

$$d_L = \frac{D_{ML1} + \sqrt{\varepsilon_L \cdot \mu_L} \cdot N \cdot d_D}{(1 + N) \cdot \sqrt{\varepsilon_L \cdot \mu_L}}$$

où $\varepsilon_L$ spécifie la permittivité relative d'une atmosphère de superposition, $\mu_L$ spécifie la perméabilité relative d'une atmosphère de superposition, $d_D$ spécifie la longueur d'un trou d'homme éventuellement présent (503, 613) ; et
fournir la grandeur caractéristique de la position de la surface limite.

12. Procédé pour mesurer un niveau de remplissage, présentant les étapes consistant à :

   détecter une courbe d'écho par l'exécution d'une mesure du temps de propagation ;
   déterminer une grandeur caractéristique de la position d'une surface limite dans un récipient par l'évaluation de la courbe d'écho détectée avec le procédé pour déterminer une grandeur caractéristique de la position d'une surface limite selon la revendication 11 ;
   déterminer un niveau de remplissage à partir de la grandeur caractéristique de la position d'une surface limite.

13. Procédé pour mesurer un niveau de remplissage selon la revendication 12, présentant en outre les étapes consistant à :

   fournir au moins un autre procédé pour déterminer une grandeur caractéristique de la position d'une surface limite dans un récipient ;
   dans lequel les différents procédés utilisent des principes différents pour déterminer la grandeur caractéristique de la position de la surface limite ;
   sélectionner un procédé ;
   déterminer le niveau de remplissage à partir de la grandeur caractéristique de la position de la surface limite avec le procédé sélectionné.

14. Support de mémoire lisible par ordinateur sur lequel est mémorisé un programme qui, lorsqu'il est exécuté sur un processeur d'un dispositif d'évaluation selon l'une des revendications 1 à 7 ou d'un appareil de mesure de niveau de remplissage selon l'une des revendications 8 à 10, met en œuvre le procédé selon l'une des revendications 11 à 13.

15. Élément de programme qui, lorsqu'il est exécuté sur un processeur d'un dispositif d'évaluation selon l'une des revendications 1 à 7 ou d'un appareil de mesure de niveau de remplissage selon l'une des revendications 8 à 10, met en œuvre le procédé selon l'une des revendications 11 à 13.

Fig. 1

Fig. 2

Fig. 3

Fig. 4

Fig. 5

Fig. 6

Fig. 7

Fig. 9

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004052110 A1
- DE 102006019191
- WO 2010071564 A1
- US 20080060431 A
- DE 19824267 A1
- US 5438867 A
- WO 03016835 A
- WO 2009037000 A
- EP 2166320 A2
- US 2003061876 A1
- US 20090299662 A1
- EP 2309235 A1

**In der Beschreibung aufgeführte Nicht-Patentliteratur**

- **DAS BUCH ; PETER DEVINE.** *Radar Level Measurement the user's guide,* ISBN 0-9538920-0-X